(19)

Europäisches
Patentamt
European
Patent Office
Office européen
des brevets

(11) **EP 1 826 688 A2**

(12) **EUROPEAN PATENT APPLICATION**

(43) Date of publication:
**29.08.2007 Bulletin 2007/35**

(51) Int Cl.:
***G06F 17/30*** *(2006.01)*

(21) Application number: **07075135.9**

(22) Date of filing: **16.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **24.02.2006 WOPCT/DK2006/000111**
**05.04.2006 US 789164 P**

(71) Applicant: **BANG & OLUFSEN A/S**
**7600 Struer (DK)**

(72) Inventors:
• **Steengaard, Bodil Hviid**
**DK -7600 Struer (DK)**
• **Jensen, Soren Borup**
**DK-7600 Struer (DK)**

(74) Representative: **Inspicos A/S**
**Bøge Allé 5**
**P.O. Box 45**
**2970 Hørsholm (DK)**

(54) **Method for learning user behaviour in a pervasive system**

(57) An information retrieval system is disclosed, in particular a pervasive system in consumer electronics and home entertainment systems for retrieval of audio and visual information but also information containing text, pictures etc., having means for recording knowledge of user operational behaviour of the system, the recorded experience to be used to improve the user convenience in the daily use of the complete system. The system adapts dynamically to recorded operational behaviour and possesses a mode of operation that might inspire the user in the daily use of system facilities.

Fig. 1

EP 1 826 688 A2

## Description

Technical Field

The present invention relates to an information retrieval system, in particular a pervasive system in consumer electronics and home entertainment for retrieval of audio and visual information but also information containing text, pictures etc., having means for recording knowledge of user operational behaviour of the system, the recorded experience to be used to improve the user convenience in the daily use of the complete system. The system adapts dynamically to recorded operational behaviour and possesses a mode of operation that might inspire the user in the daily use of system facilities. The present invention is especially directed to be applied in a multi user and multi domain environment and include access to physical - as well as the virtual information sources e.g. located on the Internet.

Background of the Invention

The huge amount of information sources that are available for daily use, e.g. Internet providers of news, music, movies, pictures and goods of any kind, ordinary DVDs and CDs, media broadcasts, telecommunication information just to a mention a few, raises a strong demand for intelligent and simple-to-use equipment and methods to support effectively a user friendly access to the target information.

Technology of this type may be seen in US 2005/0278742, EP-A-1 211 893, WO03/056821, WO01/54403, WO02/052856, JP 2003 219298A, JP 10 049540A, JP 2000 132557A, US-A-5,223,924, WO00/67091, and "Tivo Viewer's Guide Passage", 2002, XP002366656.

It is the object of the present invention to provide a system having features and technologies that improve the user-friendliness of information retrieval systems. This is obtained by having the system offer a dynamic list of services/ sources that actually are available in an intelligent mode ready for the user to choose among services and/or sources of information. The dynamic list constitutes a specific list of topics to choose among and/or supporting the user with inspiration in the operation. A concept of 'less-is-more' is described, this concept offering means for inspiration and intelligent use of an information retrieval system.

Summary of the Invention

The object is achieved with the presented functionality to inspire the user to select an experience. The system will serve a list containing different experiences for the user, experiences which all are relevant for the actual user in an actual context. When it comes to content the goal is to offer the user access to everything, any time and anywhere. Doing that is a challenge, where less is more, due to the fact that 'relevant information' is better than 'all information'. Thus the invention discloses a system where information relevant for the user in the actual situation, place and time is served to the user as an 'inspire mode of operation'.

Advanced criteria functions acts as a filter for accessing the right information, these functions operates on information sources which are accessible locally, and/or via local networks, and/or via global networks e.g. the Internet. The access to the information might be via fixed lines or via wireless communication lines or in a mix of the mentioned as appropriate for an actual system configuration.

The sources of information constitute the basic data to be filtered and reduced into a relevant set of *Suggestion* lists, which lists further, are the sources of information for generating the *Inspire* list that's presented for the user as part of an application user interface (UI).

The transformation of potential topics in the Suggestion lists to actual selected topics in the Inspiration list is controlled e.g. by definitions in a constraint relations data table.

A first aspect of the invention relates to a method of sharing information between a first and a second user, the method comprising:

- a first information system providing to the first user a list of events available to the first user,

- the second user identifying an event and informing the first information system thereof, and

- the first information system updating the list of events by including the identified event in the list of events and providing the updated list to the first user.

In the present context, an event may be any experience, the user may have, such as any movie, broadcast TV programme, live show of any kind, any type of music (radio/video, live, or recorded), viewing images, activities (playing games, browsing, sports, communicating with others in any manner), or the like.

Events may be divided into sub-groups, such as genres, types, subjects, and/or themes.

Different types may also be called different media genres, such as music, TV/sat, movie, photo, radio, internet-radio, games, exercise, web browsing, communication via sms/email or orally.

For each type or media genre, different genres exist, of which a large overlap may be seen.

Non-exhaustive examples are:

1. Music: Rock, Classic, Jazz, R&B, Country, HipHop/Rap, Pop, Electronica/Dance, Metal, etc.

2. TV: reality TV, news, programs for children and younger persons, actual subjects, entertainment, facts, drama, movies, series, sports, etc.

3. Photo: holiday pictures, party-pictures, portraits, pets, children, cars, sports, etc.

4. Internet-radio: top 25 streams, alternative, classical, comedy, country, dance/house, funk, jazz, metal, mixed, pop, rap, RnB, rock, talk, techno, the 80's, the 70's, world.

5. Games: action, adventure, development tools, educational, emulators, fighting, home, puzzle, racing, reference, role-playing, shooter, simulation, sports, strategy, traditional, utilities.

6. Movies: action, drama, thriller, exploitation, crime, adventure, fantasy, science fiction, war, musical, horror, mystery, comedy, western, epic, historical, children-family, romance, spy-film, avantGarde experimental, etc.

7. Web browsing: university-based projects, commercial database services, collection of links focused on a special subject or theme, electronic journals and magazines, compilations of information in a speciality, news, directories, company home pages, organization and association home pages, reviewing services, advertising pages, personal pages, academic institution home pages, search engines, software distribution sites, interactive sites, comedic pages, city and state pages, resource pages for special interest groups, complaint boards, government agency pages, etc.

8. Communication: sms/e-mail, person-to-person, telephone, meeting etc.

9. Exercise: sports, aerobics, etc.

In the present context, events are available to the user when these e.g. are available on or via a public-service channel/source to which the user has access. Also, available events are events stored in readily available storage media at the user, such as MP3/CD/DVDs positioned in a related player. Other events may be a list of activities available outside (maybe depending on the weather). Other events may be downloaded from the user's calendar or other knowledge of activities to which the user may gain access (concerts, movies, or the like) at or around the present point in time.

Events may be available right away or within a predetermined period of time, depending on the user's preferences. If the event was a movie shown in a movie theatre, the user would need time to get there, whereby the timing of "availability" would be different than when the movie is shown on a TV readily and swiftly available to the user.

Consequently, the present aspect enables the second user to identify or recommend an event to the first user, such as a user whom the second user knows or suspects would benefit from or like experiencing the event.

When the full experience (image, movie, music or the like) is not transmitted from the second user to the first user, the first user's information system may store this information until the event becomes available, such as when an Electronic Program Guide reveals that the e.g. movie is available on a channel available to the user. Alternatively, the informing step may comprise informing the first information system of where to access the event, such as an URL, a particular server, a particular TV/cable programme or the like. The first information system may then access the event at that position.

Preferably, the informing step comprises transmitting information relating to the identified event to a communication device, and the transmission of information relating to the identified event from the communication device to the information system. This communication may take place over a Local Area Network, a Wide Area Network, the WWW or in any other manner, depending on the distance between the two users.

In one embodiment, a plurality of information systems transmit information to or receive information from the communication device, whereby the communication device may act as a hub transmitting such identification information. Also, this device may be used for information systems to upload information to (events or the like), where the receiver (first information system) may download it and provide it to the user. Also this type of communication and sharing of events is possible.

It may be desired that the informing step also comprises the second user identifying the first user, especially when the second user is able to transmit information to multiple users.

Preferably, the identifying step comprises the second user entering information into a second communication system adapted to transmit information to the first information system. In this manner, the first person may also identify events and recommend these to the second user.

It may be desirable for the first user that the step of providing the updated list comprises informing the first user of the fact that the identified event has been identified by the second user. In this manner, the event may be put into a context or may simply be deleted/ignored depending on the first person's evaluation of e.g. the taste of the second person.

In a preferred embodiment:

- the step of providing the list of events comprises providing information relating to a number of events available to the user and generating the list by selecting, based on predetermined parameters, events from the number of events, and where

- the updating step comprises determining, based on the predetermined parameters, whether to include the event on the list or not.

The first step normally would be used when the number of events available to the first person is larger than the maximum number of desired entries on the list.

An additional parameter which it might be desirable to take into account when determining whether to provide the identified event on the list is the second user's ID. For some users (spouse, son/daughter, relative, best "mate", or the like), the actual user may decide to always wish the event to be on the list. Also, it may be desirable to always dismiss recommendations from certain persons.

In one embodiment, the updating step comprises determining, for each event available to the user, a priority, and providing, as the list, a (such as a prioritized) list comprising all events or all events having a priority higher than a predetermined, lowest priority. In this situation, the priority of the individual events may be determined, and the most pertinent event(s) easily determined. An alternative to the providing of only of events with a priority higher than a predetermined priority, it may be selected to only provide a predetermined number of events - starting at the highest priority.

An interesting embodiment is one wherein the identifying step comprises the second user experiencing the event by receiving information relating to the event from an external source (such as TV, WWW, Radio, Cable, Satellite, streams from any source), the updating step being succeeded by the step of the first user receiving information from the external source and experiencing the event. Thus, the first information system may store a number of recommendations and await that such events become available (such as from EPGs or the Internet).

Normally, a subsequent step could be that the user selects an event from the list of events, and controls an AV system to provide the event to the user. In this context, an AV system may be any system adapted to provide the event to the user. If the event is available from a public source, the AV system should have access to that source, such as using TV/Radio/WWW technology adapted to receive the signal and provide the event to the user in the form of e.g. audio or video.

A second aspect of the invention relates to a system for sharing information between a first and a second user, the system comprising:

- a first information system adapted to provide a list of events available to the first user,

- a second information system adapted to have an event identified by the second user and to inform the first information system thereof, and

- the first information system comprising means for updating the list of events by including the identified event in the list of events and to provide the updated list.

Naturally, the above definitions of events, types, genres etc. are equally relevant in relation to this aspect.

In one embodiment, a communication device is provided, the second information system being adapted to transmit information relating to the event to the communication device, and the communication device being adapted to transmit information relating to the event to the first information system. Then, a plurality of information systems may be adapted to transmit information to or receive information from the communication device.

Also, the second information system may be adapted to also transmit information relating to the identity of the first user.

As mentioned above, the first information system may be adapted to, when providing the updated list, indicate to the first user the fact that the identified event has been identified by the second user.

In an interesting embodiment, the first information system is adapted to:

- provide information relating to a number of events available to the user and generate the list by selecting, based on predetermined parameters, events from the number of events, and where

- determine, based on the predetermined parameters, whether to include the event on the list in an updated list or not.

As mentioned above, a filtering may also be performed on the basis of the identity of the recommending second user.

Also, the updating means may be adapted to determine, for each event available to the user, a priority, and to provide as the list a (preferably prioritized) list comprising all events or all events having a priority higher than a predetermined lowest priority to the user.

In one embodiment, the second information system may be adapted to identify events received from an external source, the updating means comprising updating the list only when receiving information, such as from the external source, that the event is available. In general, the informing means may be adapted to provide to the first information system information of where to access the event.

Finally, the system may also comprise means for controlling an AV system to provide the user with an event, selected by the user, from the list of events.

A third aspect of the invention relates to a method of providing information to a user, the method comprising:

1. collecting, prior to a predetermined point in time, information relating to events a user experiences and in which environment, the user was, when these events were experienced,

2. at the predetermined point in time:

- determining in which environment the user is,

- determining a number of events available to the user,

- providing, as the information, selected events of the determined events, the selection being performed on the basis of the determined environment, and the collected information.

As will become clear further below, the term "environment" is to be given the broadest possible interpretation. The "environment" is meant to be everything which may affect the user while experiencing an event.

The overall function of the present method is to be able to inspire the person by providing a list of selected events similar to other events that the user has experienced in the same or a similar environment.

However, as only events (see further above) which are available to the user may be candidates to the "inspire list", a selection is made of these available events as to which are the "closest to" the formerly experienced events in relation to the environment and the type/genre/content/subject/theme of the event. The most relevant events are then provided to the user for his/her selection.

One type of environment may be a forum/venue/room in which the user is positioned. Naturally, also other forums/venues/rooms than ones wherein the user readily has events available (such as in the user's home) may be used, such as concerts, shopping centres, or the like.

In this context, a room/forum/venue may be defined in any manner. Different rooms/forums/venues may be different rooms in a house. Alternatively or additionally, these may include a summer house, one or more cars, the working place of the user as well as a general "room/venue/forum" which the user is in when "on the road", such as when travelling. Naturally, different means of travelling may be differed as different "rooms/forums/venues". Also, a room/forum/venue may be an external place, such as a concert, a movie theatre or the like.

In one embodiment, the step of providing the selected events comprises:

- for each of the determined events, provide a priority estimate on the basis of:

- a quantification, for each of one or more events of the collected data, of a difference between the environment in which the user was when experiencing the event of the collected data and the determined environment,

- a quantification, for each of the one or more events of the collected data, of a similarity between a subject, genre, type, and/or theme of the event of the collected data and of the determined event,

- provide only available events having a priority estimate higher than a predetermined lowest priority.

In this context, the difference between the forums/rooms/venues may be a physical distance there between or a predetermined difference determined on the basis of a difference in the uses of the rooms/venues/forums or the like. Thus, the difference between a living room and a bed room may be defined to be large, even though these rooms are positioned physically beside each other in a house.

Preferably, step 2. is performed when the user changes room/venue/forum, in order to maintain the list updated. In fact, it may be desired to continuously update the list in order to always provide the user the best possible - or most inspiring - list of available events.

In another embodiment, the environment comprises a time of day, the week, the month, and/or the year of experiencing the event(s) and wherein:

- step 1. comprises determining, for each of one or more of the events of the collected data, a time of the day, the week, the month, and/or the year of experiencing the event,

- step 2. comprises determining an actual time of the day, the week, the month, and/or the year, and wherein the step of providing the selected events comprises:

  - for each of the determined events, provide a priority estimate on the basis of:

    - a quantification, for each of the one or more events of the collected data, of a difference between the actual time of the day/week/month/year and the time of day/week/month/year of the event of the collected data,
    - a quantification, for each of the one or more events of the collected data, of a similarity between a subject, genre, type, and/or theme of the event of the collected data and of the determined event,

  - provide only available events having a priority estimate higher than a predetermined lowest priority.

Users may have quite fixed rhythms which he/she desires maintained. Also, the user may have different rhythms or habits on weekdays and days of.

Thus, if the user usually listens to quiet or slow music in the living room in the afternoon when returning from work, this type of music may be given a high priority when the user enters the living room in the afternoon on a weekday.

Another embodiment is one wherein:

- step 1. comprises determining, for each of one or more of the events of the collected data and as at least part of the environment, information relating to the weather at the point in time of experiencing the event,

- step 2. comprises determining information relating to the actual weather, and wherein the step of providing the selected events comprises:

  - for each of the determined events, provide a priority estimate on the basis of:

    - a quantification, for each of the one or more events of the collected data, of a difference between the actual weather and the weather at the time of experiencing the event of the collected data,

    - a quantification, for each of the one or more events of the collected data, of a similarity between a subject, genre, type, and/or theme of the event of the collected data and of the determined event,

  - provide only available events having a priority estimate higher than a predetermined lowest priority.

In this context, a difference in the weather may e.g. be a difference in outside temperature, whether there is precipitation or clouds, or whether the sun is out or not.

Also, the company may be relevant, whereby, in another embodiment:

- step 1. comprises determining, for one or more of the events of the collected data and as at least part of the environment, information relating to how many other persons were with the user when experiencing the event,

- step 2. comprises determining information relating to how many persons are with the user, and wherein the step of providing the selected events comprises:

- for each of the determined events, provide a priority estimate on the basis of:

  - a quantification, for each of the one or more events of the collected data, of a difference between the determined number of persons and the number of persons with the person at the time of experiencing the event of the collected data,

  - a quantification, for each of the one or more events of the collected data, of a similarity between a subject, genre, type, and/or theme of the event of the collected data and of the determined event,

- provide only available events having a priority estimate higher than a predetermined lowest priority.

Not only the number of persons with the user, such as in a room, house, venue or the like, is relevant but also other parameters, such as their level of activity (sitting, dancing, walking about, cleaning, or the like). Other relevant parameters may be the amount of sound these persons generate (preferably filtered from any sound generated by an event presently provided).

In fact, it may be desired to be able to recognize or identify the other persons in order to tailor the suggested events to also these persons. Different events may be provided if the other persons are children or adults and whether the persons are family or friends.

Another parameter may be the atmosphere in the room, such as the humidity, sound pressure (shouting or whispering, noise, talking, laughter), whether the drapes/shades are drawn or not, whether all persons take part in the event or others perform other tasks (talk, read, play cards, etc.).

Also parameters of an actual room/venue/forum may be of interest, such as the audio/speaker or lighting setting (which lamps, how bright, which colour, shades/blinds drawn, etc) or the room temperature. These parameters may describe the person's mood or the surroundings at the present time. Dimmed lighting e.g. may indicate that an intimate situation takes place and that the music or other events should not be loud or fast. Thus, in one embodiment:

- step 1. comprises determining, for each of one or more of the events of the collected data and as at least part of the environment, information relating to a lighting setting, room temperature, and/or a audio/speaker setting when experiencing the event,

- step 2. comprises determining information relating to an actual lighting or audio/speaker setting, and/or room temperature, and wherein the step of providing the selected events comprises:

  - for each of the determined events, provide a priority estimate on the basis of:

    - a quantification, for each of the one or more events of the collected data, of a difference between the room temperature or lighting setting and/or audio/speaker setting when experiencing the event of the collected data and the actual room temperature/lighting/audio/speaker setting,

    - a quantification, for each of the one or more events of the collected data, of a similarity between a subject, genre, type, and/or theme of the event of the collected data and of the determined event,

  - provide only available events having a priority estimate higher than a predetermined lowest priority.

Other relevant environment information in that context is knowledge of whether the same person also experiences other events at the same time, or if other users experience events in the same or other locations, and whether these events are connected.

In addition to the more "external" parameters (external to the user), also the actual mood of the user may be interesting in relation to suggesting the correct or most interesting events.

Thus, in one embodiment:

- step 1. comprises determining, for each of one or more of the events of the collected data and as at least part of the environment, information relating to a mood of the user when experiencing the event,

- step 2. comprises determining information relating to an actual mood of the person, and wherein the step of providing the selected events comprises:

  - for each of the determined events, provide a priority estimate on the basis of:

7

- a quantification, for each of the one or more events of the collected data, of a difference between the user's mood when experiencing the event of the collected data and the actual mood of the user,

- a quantification, for each of the one or more events of the collected data, of a similarity between a subject, genre, type, and/or theme of the event of the collected data and of the determined event,

- provide only available events having a priority estimate higher than a predetermined lowest priority.

The user's mood may be determined in a number of manners. The simplest manner is for the user to simply enter, into the system, information relating to the user's mood.

Another manner is to use information relating to the environment: the lighting setting selected by the user, the music selected by the user, or the like. Dimmed lights and loud, fast music could indicate that a party is going on, where dimmed light and dimmed, slow music rather indicates a more moody situation (sad or romantic, e.g.).

Also, the behaviour of the user may be used for determining the user's mood. Using imaging technology adapted to recognize faces or grimaces of the person is one manner. Other manners may be to analyze the user's movement pattern, temperature, voice (loud, quiet, crying, laughing, etc.) or the like.

In general, the method may comprise the subsequent steps of the user selecting an event from the provided information, and an AV system is controlled to provide the event to the user.

In a final aspect, the invention relates to a system for providing information to a user, the system comprising:

- first means for collecting, prior to a predetermined point in time, information relating to events a user experiences and in which environment the user was, when these events were experienced,

- second means for, at the predetermined point in time:

  - determining in which environment the user is,

  - determining a number of events available to the user,

  - providing as the information, selected events of the determined events, the selection being performed on the basis of the determined environment and the collected information.

Thus, in one embodiment, the means for providing the selected events comprises:

- means for, for each of the number of determined events available to the user, provide a priority estimate on the basis of:

  - a quantification, for each of one or more of the events of the collected data, of a difference between the environment in which the user was when experiencing the event and the determined environment,

  - a quantification, for each of the one or more of the events of the collected data, of a similarity between a subject, genre, type, and/or theme of the event of the collected data and of the determined event,

the providing means being adapted to provide only available events having a priority estimate higher than a predetermined lowest priority.

Normally, the second means are adapted to perform the quantification and providing steps when the user changes room/venue/forum. or even continuously, in order for the information provided to stay updated and relevant. In one embodiment, different rooms/venues/forum are different rooms in a house, a house, a summer house, a car, a persons place or work, or generally when the person is "on the road".

In one embodiment:

- the collecting means are adapted to determine, for each of one or more of the events of the collected data and as at least part of the environment, a time of the day, the week, the month, and/or the year of experiencing the event,

- the second means are adapted to determine an actual time of the day, the week, the month, or the year, and comprise means for, for each of the number of determined events available to the user, provide a priority estimate on the basis of:

  - a quantification, for each of the one or more of the events of the collected data, of a difference between the determined actual time of the day, the week, the month, and/or the year and the time of the day, the week, the month, and/or the year at which the user was when experiencing the event,

- a quantification, for each of the one or more events of the collected data, of a similarity between a subject, genre, type, and/or theme of the event of the collected data and of the determined event,

the providing means being adapted to provide only available events having a priority estimate higher than a predetermined lowest priority.

Naturally, the time of day/week/month/year may be obtained from an internal clock or calendar or from an external source, such as a TV signal or the WWW.

In another embodiment:

- the collecting means are adapted to determine or receive, for each of one or more of the events of the collected data and as at least part of the environment, information relating to the weather at the point in time of experiencing the event,

- the second means are adapted to determine or receive information relating to the actual weather, and comprise means for, for each of the number of determined events available to the user, provide a priority estimate on the basis of:

  - a quantification, for each of the one or more of the events of the collected data, of a difference between weather at the experiencing of the event of the collected data and the actual weather,

  - a quantification, for each of the one or more events of the collected data, of a similarity between a subject, genre, type, and/or theme of the event of the collected data and of the determined event,

the providing means being adapted to provide only available events having a priority estimate higher than a predetermined lowest priority.

The weather information may be derived from sensors, such as sensors positioned outside, or from e.g. the WWW or weather information in e.g. a TV signal.

In yet another embodiment:

- the collecting means are adapted to determine or receive, for each of one or more of the events of the collected data and as at least part of the environment, information relating to how many other persons were with the user when experiencing the event,

- the second means are adapted to determine or receive information relating to how many persons are with the user, and comprise means for, for each of the number of determined events available to the user, provide a priority estimate on the basis of:

  - a quantification, for each of the one or more of the events of the collected data, of a difference between the number of persons that were with the user when experiencing the event of the collected data and the actual number of persons with the user,

  - a quantification, for each of the one or more events of the collected data, of a similarity between a subject, genre, type, and/or theme of the event of the collected data and of the determined event,

the providing means being adapted to provide only available events having a priority estimate higher than a predetermined lowest priority.

The number and identity of persons may be obtained using imaging technology and e.g. face recognition or by the persons wearing e.g. tags (such as RFID tags) from which they may be identified and counted. Naturally, the persons may also be required to state their identity or type it into a keyboard.

Also, in one embodiment:

- the collecting means are adapted to determine or receive, for each of one or more events of the collected data and as at least part of the environment, information relating to a room temperature, a lighting setting and/or a speaker setting when experiencing the event,

- the second means are adapted to determine or receive information relating to an actual room temperature and/or lighting setting and/or speaker/audio setting, and comprise means for, for each of the number of determined events available to the user, provide a priority estimate on the basis of:

- a quantification, for each of the one or more of the events of the collected data, of a difference between the room temperature/lighting setting/speaker/audio setting when experiencing the event of the collected data and the actual room temperature/lighting setting/speaker/audio setting,

- a quantification, for each of the one or more events of the collected data, of a similarity between a subject, genre, type, and/or theme of the event of the collected data and of the determined event,

the providing means being adapted to provide only available events having a priority estimate higher than a predetermined lowest priority.

In yet another embodiment:

- the collecting means are adapted to determine or receive, for one or more of the events of the collected data and as at least part of the environment, information relating to a mood of the user when experiencing the event,

- the second means are adapted to determine or receive information relating to an actual mood of the user, and comprise means for, for each of the number of determined events available to the user, provide a priority estimate on the basis of:

    - a quantification, for each of the one or more of the events of the collected data, of a difference between the user's mood when experiencing the event of the collected data and the actual mood of the user,

    - a quantification, for each of the one or more events of the collected data, of a similarity between a subject, genre, type, and/or theme of the event of the collected data and of the determined event,

the providing means being adapted to provide only available events having a priority estimate higher than a predetermined lowest priority.

As mentioned above, the collecting means and the second means may comprise one or more of a number of means for determining the user's mood, such as imaging means for obtaining an image of the person or a part thereof in order to determine the person's mood, such as from grimaces or the person's behavioural pattern. Alternatively, the person's temperature, behaviour, choice of music/lighting or other information may be used.

Finally, the system may further comprise means for controlling an AV system to provide the user with an event, selected by the user, from the provided information.

Brief Description of the Figures

An embodiment of the present invention is illustrated with the enclosed figures of which:

Fig. 1 shows the general concept of the system lay-out,

Fig. 2 shows the control- and dataflow of Learning and Acting system,

Fig. 3 shows a three-dimensional context room,

Fig 4 illustrates an example of a criteria-/distance calculation,

Fig. 5 shows the applied metrics in the user context room,

Fig. 6 & 7 shows the applied metrics on the place and time axes,

Fig. 8 & 9 shows the applied metrics on the time-of-week and time-history axes,

Fig 10 illustrates an example of the constraint based selection concept,

Fig. 11, 12, 13, 14 & 15 shows the calculation procedures.

Detailed Description of Embodiments of the Invention

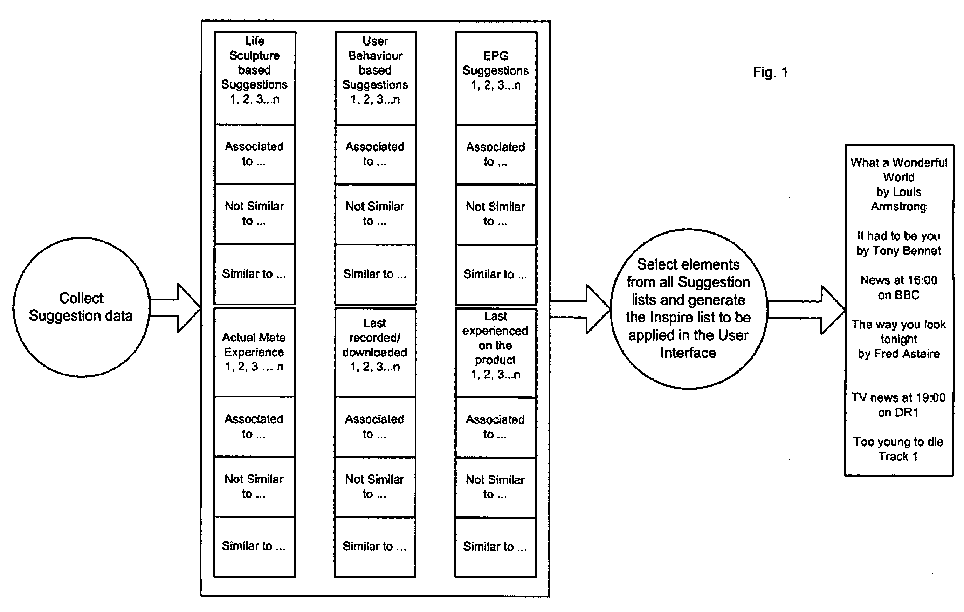

The present embodiment comprises a content suggestion control arrangement to assist the users in choosing from the amount of sources of information available. The content suggestion control arrangement (Fig. 1) may present the user with an *Inspire list* established with elements from the *Suggestion lists* these lists being a comprehensive collection of information related to an actual user, the personal background of the user and the behaviour of the user in the access to information supported by the system:

- Actual mate experience. This refers to the experience that a friend or a family member located elsewhere is experiencing right now. If the other person is located in another location, the system is retrieving this information via a web service on the internet, and if the other person is located in the same location as the user, the information is retrieved via a local network.
- User behaviour based suggestions. This refers to a list based on collected user behaviour data, including the time and sub-domain of rendering of particular source of information and suggests contents based on experiences made close to the user's present actual situation.
- Electronic Program Guide suggestions (EPG). This refers to a list of programs offered from commercial broadcast channels, e.g. but not limited to sources as TV channels, Audio (FM) channels, satellite channels and WEB based media channels, e.g. DAB Digital Audio Broadcast.
- Similar to Context based suggestions. This refers to a list with experiences that resemble the experiences mentioned in paragraph 2 and is based on the well-known more-or-the-same (MOTS) calculations.
- Life Sculpture suggestions. This refers to a list of experiences that the "Life-Sculpture" module suggestions to the user, on the basis of the information the user has given about in what direction he/she wants the personal use-pattern to move and at the same time paying attention to the actual use-pattern of the user. Examples of Life Sculpture suggestions: "A given genre must be made a priority over every other". "A given artist must be made a priority over every other". "A given media genre must be made a priority over every other". "I don't want that, I want something else - I don't know what". "I would like to be inspired". "I don't want to be inspired". "A given time interval must be made a priority over every other".
- The last experience which has been rendered in the sub-domain. This refers to the experience that previously has been rendered in the sub-domain, or the experience that the user previously has had in the sub-domain.
- The Last recording which has been recorded/downloaded in the sub-domain. This refers to the experience that previously has been recorded in the sub-domain.
- Absolutely not similar to user behaviour based suggestions. This refers to the generation of a list of experiences that absolutely not assembles any of the experiences mentioned above.

Which elements from above-mentioned Suggestion lists that is extracted and used in an Inspire list presented to the user is determined by the following:

- Similar to Context based media genre suggestions. The "user-behaviour-context space" can determine which media genre that is closest to the actual situation of the user. If this media genre is an audio-visual experience, the system will make audio-visual experiences a priority over everything else. If "Life Sculpture" tells that the user desires to change this, the "Life Sculpture" media genre will override.
- Similar to Context based activity suggestions. The "user-behaviour-context space" can determine which activity that is closest to the actual situation of the user. If this activity is "Play" the system will generate an Inspire list that mainly contains play-suggestions. If the activity is "communication", the Inspire list will contain at least one communication suggestion. If "Life Sculpture" tells that the user desires to change this, the "Life Sculpture" activity genre will override. Calculations in the "user-behaviour-context space" can determine who this person might want to communicate with at this time. Life sculpture can remove something from the Inspire list and/or add something new.

The Inspire list is dynamic and changes all the time to adapt to any new situation. An operation from the user, or just the fact that the time goes by, can trigger that the list is changing. When the user is browsing his music collection, photo collection, film collection, etc. the list is changing. The more the user by the choices made restrains the possibilities in the navigation e.g. in his music collection the more filtered the Inspire list will be. If there in the behaviour of the "user-behaviour-context space" or in the life sculpture of the user is something dominating from another media genre, this is also to be displayed in the Inspire list. For instance if the user listens to music and browses his music collection, a TV program might appear in the Inspire list. When a user selects an experience the list will change to adapt to this new situation. When an element in the Inspire list is marked e.g. by moving a mouse cursor over it, metadata may be displayed for the actual element. This metadata tell the user why this element is included in the Inspire list with phrases like "similar to ...", "often used", "found in the EPG" and "similar to ...", "just recorded" etc.

The system according to the present embodiment comprises a content suggestion control arrangement having an element for the collection and analysis of user behaviour data for providing suggestions to the user of the system of content, i.e. sources of information to be rendered by the user in sub-domains of the system. The present element for the collection and analysis of user behaviour data is unique in that it collects and analyses data not only concerning the contents, i.e. units of information, accessed and used for rendering by the specific user, but also including the context of rendering, i.e. the sub-domain among a plurality of sub-domains in the system in which the user had the experience with the contents. Thus, the content suggestion control arrangement may suggest content to the user based on other factors also on the context in which the user require suggestions for content source.

A simple example is a user who usually listens to a specific radio broadcasted channel in the kitchen, which is a sub-domain of the system in a house. When the user asks for a list of suggestion of contents in this sub-domain, the system will have the particular radio channel on the list. Furthermore, the user behaviour data comprises the time of the day of rendering of the units of information, including information of the date, from which data relating to the type of day, i.e. working day, holiday, weekend, season of the year etc. may be deduced so that these factors may be included in the analyses leading to the suggestion of content to the user.

For enhancing the ability of the content suggestion control arrangement to analyse the collected data and calculate suitable suggestions, it is an advantage that metadata relating to the content of the units of information are stored in data storage means accessible by the system, whereby not only units of information previously rendered by the user in question may be suggested to a user but also units of information related to or diverting in specified directions from previously rendered units of information.

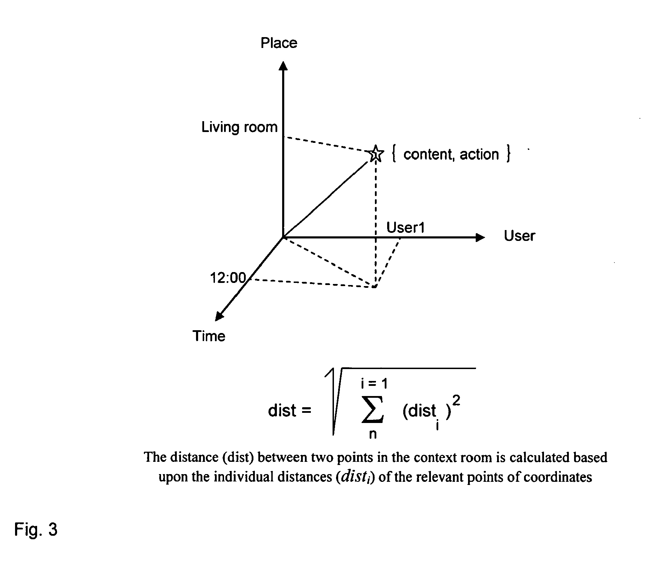

All these collected user data may be stored in a multi-dimensional space where each axis represents one of the types of data, i.e. the time of rendering, the sub-domain etc. as illustrated with a three-dimensional space in Fig. 3. The weight of a given set of data for a particular user experience of a unit of information on the provision of suggestions of contents to a user may be dependent on the distance between the set of data and the occasion in which the suggestions are requested, i.e. the time and date, the sub-domain etc. so that experiences closer in time are weighted higher than more distant experiences, etc. A number of parameters defining the weight of various data in a collected set of data may be user-defined.

The element for the collection and analysis of user behaviour data collects and stores data continuously and the user may e.g. choose to request suggestions based on another occasion than the present, i.e. suggestions based on a date several years ago, on summer vacation although the actual season is winter etc., and collected user behaviour data may be exchanged between users of the system and of similar systems.

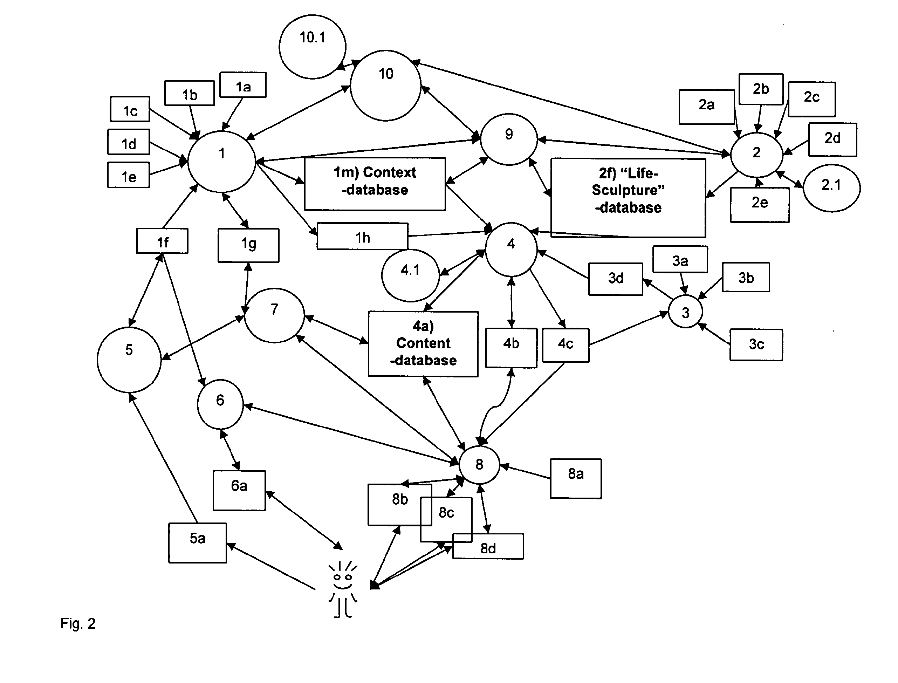

An example of the architecture of a complete content suggestion control arrangement according to the present invention is shown in Fig. 2, where:

1. is the collection of user behaviour,

1a. is the place, i.e. the sub-domain,

1b. is the time (year, date time, working day or holiday),

1c. is the actual user operation of the rendering units,

1d. presence of users in the sub-domain,

1e. the type of situation: a)"lean back", b)"lean forward", c) "moving around close", or d) "moving around distant",

1f. user identifier and state of mind (mood),

1g. unit of information being rendered in the sub-domain, selection of units of information by the user and ambience settings,

1h. the actual context,

1m. Context-database. Collected user behaviour data (user id, place and time),

2. Collecting Life-Sculpture,

2.1 Interaction with the user,

2a. the user's profile: age, sex, education, interests etc.

2b. the user's requirements: e.g. a whish to experience a given artist, genre etc.

2c. user's whish to be surprised,

2d. user's whish to be inspired,

2e. user's whish to change habits,

2f. Life Sculpture database (collected Life-Sculpture data),

2.1 communications with the user (user interface UI),

3. Collection of inspiration and surprise contents,

3a. other user's behaviour data,

3b. Search for content,

3c. Search for alternatives to content,

3d. Collected inspiration and surprise content suited for the profile of the actual user,

4. Handling and interpretation of: a) Collected user behaviour data, b) Life Sculpture data and c) Collection of inspiration and surprise contents,

4.1. MOTS (More-Of-The-Same) calculations,

4a. The Content database,

4b. Communication between the system and the content suggestion control arrangement,

4c. Model profile from e.g. a friend or another person,

5. User-recognition Face and voice-recognition Speech-recognition. User-Mood recognition,

5a. Biometric measurements of the user for unique identification,

6. Communication with the user, recognition of user's behaviour and qualified guessing of the user's requirements to experience,

6a. User query,

7. Content-recognition. How to find something similar? Content-mood recognition and/or ambience recognition,

8. The system applies the profile, the collected inspiration and surprise contents, the possible biometric measurements and the present system functions to suggest a personal tailored experience to the user,

8a. System functions controlling the operation of the content suggestion control arrangement,

8b. Information access as experienced by the user when implemented in the content suggestion control arrangement.

8c. The Inspire-list alone or combined with a Content Navigator system

8d. Content Navigator constructed and arranged in accordance with the user behaviour as experienced by the user when implemented in the content suggestion control arrangement.

9. Initializing and configuration of collected user behaviour and Life Sculpture.

10. Communication with other products.

10.1 Proprietary middleware between equipment of the system.

The primary target of the invention is to offer operational features for the benefits of the user, where the system adopts relevant experiences and in a simple and easy-to-use mode is able to suggest interesting options and potential selections to be made for the user. This mode of operation might be named 'Inspire':

The system might inspire the user to select an experience.

The System will serve a list containing different experiences for the user, experiences which all are relevant for the actual user in the actual context.

When it comes to content the system can give the user access to everything, anytime and anywhere. Normally this will imply that the user gets a lot of choices as well, choices which it seems like the user doesn't want. Instead the system must find out exactly what is relevant for the actual user in the actual situation, place and time, and then serve that to the user in the right way, where less-is-more.

In one aspect of the invention a function has to log the user behaviour, which implies that the System knows the habits of the user / users, and knows what he/she/they usually select in a given context.

The Inspire-list served to the user by the system takes values connected to user behaviour patterns. An experience from the user behaviour patterns is not the only contributor to the Inspire-list.

Often experiences from the user behaviour patterns is not relevant, either because it is the kind of content the user only wants to experience once, or because the user wants to change habits or wants to be surprised. Thus the user behaviour is a very important basis for creating the Inspire-list.

In a preferred embodiment of the invention the following different suggestions contribute to the Inspire-list:

    1) User behaviour based - suggestions
    2) Life sculpture - suggestions
    3) Actual mate experience
    4) Suggestions which are similar to user behaviour based suggestions
    5) Last recorded - suggestions
    6) EPG - suggestions
    7) Last experienced on the product - suggestions
    8) Absolutely not similar to user behaviour based suggestions
    9) Associated to user behaviour based - suggestions
    10) Associated to actual experience - suggestions
    11) Suggestions which are similar to Actual mate experience
    12) Random
    13) Similar to last recorded - suggestions
    14) Similar to EPG - suggestions
    15) Associated to Actual mate experience - suggestions
    16) Other

Which suggestions are chosen / selected for the resulting Inspire-list is dependent mostly of user behaviour information, e.g. but not limited to media genre and activity.

The Life Sculpture information acts like a filter and can cause a removal of elements from the Inspire-list. The Life Sculpture can add elements as well.

In a preferred embodiment of the invention the Inspire mode of operation enable the user to experience and to be:

•    inspired to listen to the very same music which the user always listen to in the actual situation (actual context),
•    inspired to listen to music which is similar to the music which the user always listen to in the actual situation (actual context,
•    inspired to watch a TV-programme found in the EPG by the system, a TV-programme which is similar to those programmes which the user uses to select in the actual situation (actual context),
•    inspired to have the same experience as the one the users friend is having right now, The system acts as a "Butler" who knows and understands and helps the user.

In another aspect of the invention the system supports the user to gain experience of his/her personal use patterns. The system will only display that information to the user if requested so by the user. If the user wants to change some of those user patterns, then this is done by communicating those wishes to the Life-style-intelligence meta data.

In yet another aspect of the invention the system supports the user to get help from the system to change habits, e.g. to move the user pattern in a certain direction, if the user wants so.

If the user has told the system that he / she wants to listen to music more and watch TV less then the system will help the user to do so. This is relevant only for those habits which the user has informed the system that he/she wants to change.

In the preferred embodiment of the invention user behaviour is collected and constitutes the suggestion data (see Fig. 1), which data is the source for generating the user related Inspire list.

The suggestion data is a collection of events recorded by the system, these events being data elements with 3 objects: a) content, b) action in this content, and c) the actual context variables for this user.

The content object contains the 'stored content' as well as 'live content', the content being stored as an identifier of the actual content related to the event. Thus all content has unique identifiers in the overall system. All data resides in databases containing stored meta data e.g. but not limited to: music-database, photo-database, movie database, audio-memory database, video-memory database, e-mail database, phone-message database, or a list with live content active data e.g. but not limited to: TV - source in the kitchen, TV source in the main room, and audio tuner in the bed room. The stored content is the unique content identifier for the actual database and/or source in action as the identified event.

The content-identifiers might be stored in a short- or even in a long period of time, which enables the user to replay a specific event from historical recorded events.

In yet another aspect of the invention the system handles physical as well as virtual sources of information. E.g. if a DVD actually is in a media player it might be added to the relevant music/movie database and allocated a content-identifier.

The action object contains information about the use of the actual content, the use level being quantified as: a) identified and accessed, or b) observed and ignored. This use level validation is a mixture of time spent on the event and level of interest.

The system automatically records the action, and optionally the user has the possibility specifically to qualify the action object to be 'good' or 'bad'.

Thus the action object might have e.g., but not limited to, the attributes: a) viewed completely, b) viewed shortly within a predefined time period, c) user has marked as 'good', d) user has marked as 'bad', e) new content added, and f) user has discarded to add a system proposed action.

The context object contains parameter values of a set of recorded context parameters, e.g. but not limited to: a) user ID, b) place [domain, sub domain, room], c) time and date, d) ambience of the room (light/temperature), e) user mood , f) other user preferences, g) actual operation [source, control position/mode], and h) miscellaneous.

In yet another aspect of the invention the system handles multi user and multi domain operations. For two or more consecutive users in the same room the attributes for one user might be dependant of the activity of another user, thus its two different situations if the user is alone in a room or one or more other users are active on the system in the same room.

In the preferred embodiment of the invention user behaviour data is collected and constitutes the collection of recorded events. The context related data is to be considered as an n-dimensional space (Fig. 3) having the context parameters along the axis. In a basic context room with the context parameters 'place', 'time' and 'user' the space is in 3 dimensions. Any event might be located in the space having related content and action parameter values. At the opposite there is not necessarily an event related to every point in the context room. There might be 0, 1, 2 or more events related to all points in the context room. Extension of the context room with one more parameter implies that the n-dimensional space is extended to be a (n+1)-dimensional space.

Any situation the user might be in equals one point in the context room. To validate different experiences and to identify when a situation is new and/or different from a previous situation a calculation is executed by the system. This calculation is to determine when/if and a point in the context room is identical to or close to another point in the context room. This validation is to identify events to record, and the calculation for similarity is based on that numerical values are assigned to the different variables (axis in the coordinate system), and that the distance between two points is calculated by the formula of Euclid:

$$\text{dist} = \sqrt{\sum_{i=1}^{n} (\text{dist}_i)^2}$$

The distance (dist) between two points in the context room is calculated based upon the individual distances (*dist_i*) of the relevant points of coordinates.

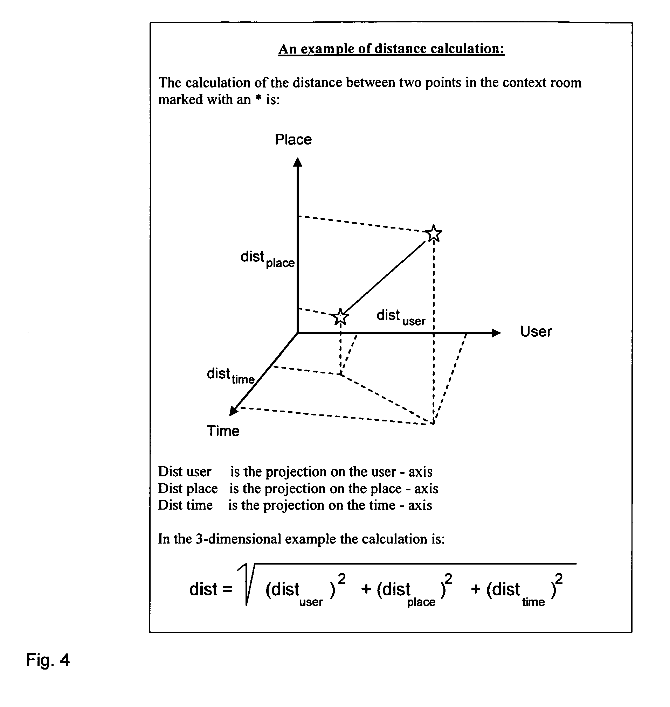

Figure 4 displays an example of the preferred embodiment of the invention having a 3-dimensional space and a calculation of the distance between the two points marked with the '*'.

The same calculation principle is used for the recorded suggestions data of the type: a) User Behaviour based suggestions; b) Life Sculpture based suggestions; and c) EPG suggestions.

In another aspect of the invention the Life Sculpture parameters defines a multidimensional data space of social and/or life related options e.g., but not limited to: age, sex, interests, political orientation, religion, preferred media genre, and preferred food.

In another aspect of the invention the EPG parameters defines a multidimensional data space of electronically program guides available as virtual media sources or as physical sources e.g., but not limited to: TV stations, radio stations, satellite channels, DAB channels, tele/phone services, e-mail, and WEB services.

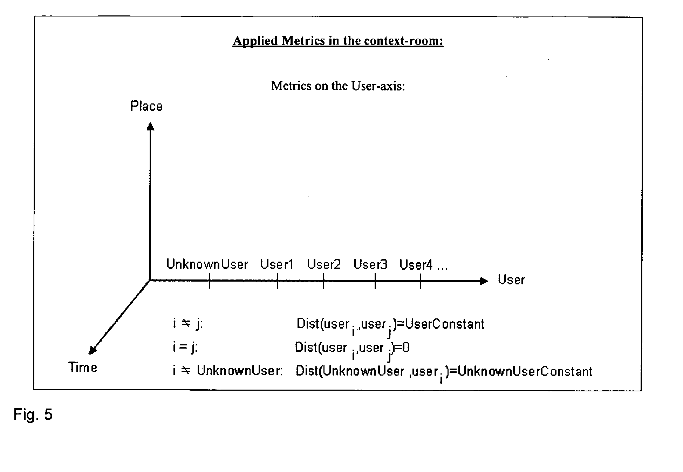

Figure 5 displays the metrics on the User axis of the preferred embodiment of the invention. Identical users are identified when having i = j.

The UserConstant is a defined default value that's assigned as the delta criteria.

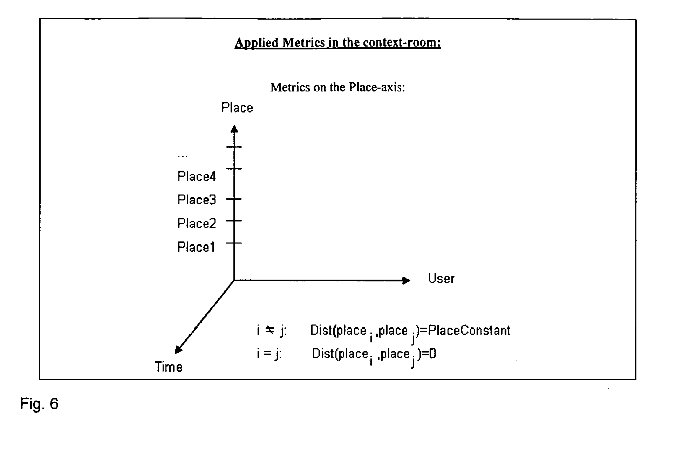

Figure 6 displays the metrics on the Place axis of the preferred embodiment of the invention. Identical places are identified when having i = j.

The PlaceConstant is a defined default value that's assigned as the delta criteria.

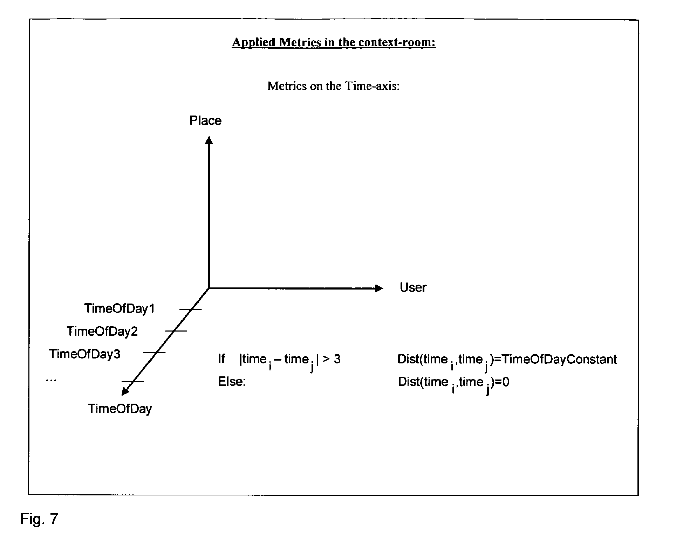

Figure 7 displays the metrics on the Time axis of the preferred embodiment of the invention. Identical time-frame is identified when having the calculated delta time falls within a pre-defined interval value (e.g. 3 hours).

The TimeOfDayConstant is a defined default value that's assigned as the delta criteria.

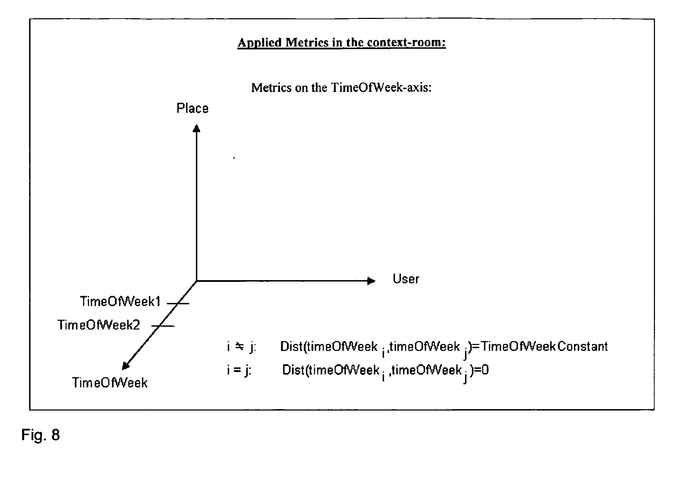

Figure 8 displays the metrics on the Time-Of-Week axis of the preferred embodiment of the invention. A new time-frame is identified when having the calculated delta time greater than a pre-defined value (TimeOfWeekConstant).

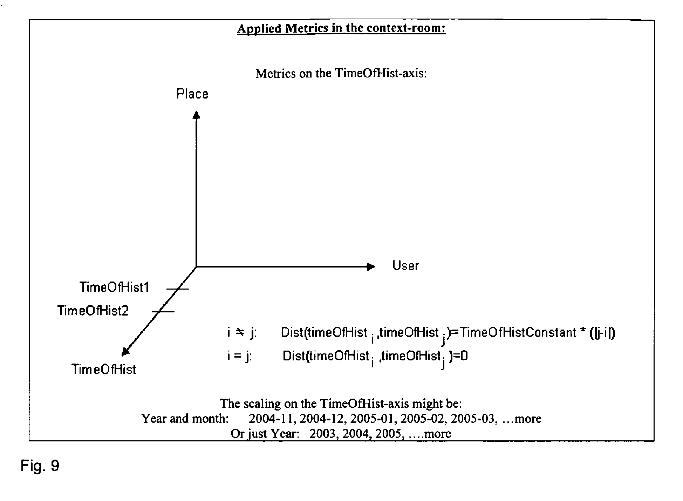

Figure 9 displays the metrics on the Time-Of-Week axis of the preferred embodiment of the invention. A new time-frame is identified when having the calculated delta time greater than a pre-defined value (TimeOfHistConstant).

In one embodiment of the invention an example of parameter values in the context room is:

| Axis | Variable: | Description | Symbolic values |
|---|---|---|---|
| 1.dim. | User | User identifier | Unknown, user1, user2, user3, ..., userN |
| 2.dim. | Place | Domain, sub domain, room or zone | Livingroom, kitchen, bedroom, office, bathroom, summerhouse, car, hotel room |
| 3.dim. | Time of the day/night | The time axis is contiguous and not quantified. The time might be considered to be cyclic in a 24 hours period. | Integers (Differences between two time stamps) |
| 4.dim. | Time period in a week | Most users might have different habits and use patterns from day to day and in workday versus holidays and week-ends. | Workday, week-end or holiday |
| 5.dim. | Time on the time axis | Future, near future, very far future or actual time | Month, Year |
| x.dim. | Sound | Speaker configuration in the room | Htset1, htset2, htset3, htset4, htset5 |
| y.dim. | Light | Light configuration in the room | Lightset1, lightset2, lightset3, lightset4, lightset5 |
| z.dim. | User mood | The actual mood of the user and/or the mood in the room. | glad, happy, sad, depressed, calm, tired, excited, exhausted, quiet, noisy, other |
| p.dim.: | Ambience | The ambient atmosphere | Temperature, pressure, other |
| q.dim.: | Number of persons in the room | Relevant in some cases to distinguish between the number of users and if they are active or passive users of the system | Compound status with number 0, 1, 2, 3, ..., N and the status code (active/passive) |

(continued)

| Axis | Variable: | Description | Symbolic values |
|---|---|---|---|
| r.dim.: | Operation | The actual operation active on a specific unit and level in the system | Compound status with codes: . Systemlevel . Operation |
| more | | | |

As disclosed in Figure 2 more data sets act as central storage of the content data (4a), the context data (1m), the content data (4a) and the life sculpture data (2f).

In the preferred embodiment the content data constitutes the collection of records for: Id, file name, title, media genre [music, photo, internet radio, movie, web, e-mail, sms, v-memory, a-memory, TV tuner, SAT tuner, CD/DVD player], genre [rock, jazz, classic, etc.], artist, album, owner, mood [depressed, exhausted, cal, exited, glad, sad, angry etc.], year/date, time, manufacturer, model, country, language, station, strm codec, strm bandwidth.

In the preferred embodiment the context data constitutes the collection of records for:

Id, user, place, date time, content Id of presentation media, light setting, speaker setting, social connected to user Id, activity [play, login, grab, throw, record, skip, make play list, add meta data, make personal channel, make book mark, input new content, communicate, selected elements from suggestion lists, channel selected, traditional navigation music mode, traditional navigation genre mode, traditional navigation content mode, other].

In the preferred embodiment the life sculpture data constitutes the collection of records for: Id, user, sex, age, married status, education, relatives [family, friends, other], job category, interests [sport, culture, action, travel, art, literature, movie, music, food, practical, academic, scientific, philosophic], life style, location [home, vacation, temporary], contact [phone, web, e-mail, other], event calendar, other.

In the preferred embodiment of the invention suggestion data sets are generated via context space calculations.

In one aspect of the invention user behaviour based suggestion lists might be calculated based on an actual context point defined by: the user id, the actual place, and the actual date time. Thus for all existing points in the context space the distance between the point and the actual point is calculated applying the metric of the context space. A plurality of different suggestion list might be generated by the system: a) a list with a preferred view = titles and activity = play, this is often played titles, b) a list with a preferred view = titles and activity = play and media genre = music, this is often played music titles, c) a list with a preferred view = genre and activity = play and media genre = music, this is often played music genres, d) a list with a preferred view = album and activity = play and media genre = photo, this is often played photo albums, e) a list with a preferred view = artist and activity = play and media genre = music, this is often played music artists.

In one aspect of the invention the system constructs a suggestion-list which contains the content-titles which the actual user usually plays in the actual place and at the actual time. Those content-titles is a mix of live content and stored content, and is a mix of different media genre, e.g.: music-track-titles, music-album-titles, movie-titles, TV-channels, photo-titles, photo-album-titles (automatically generated), web-pages, e-mail-subject-titles, radio-channels, CD-player.

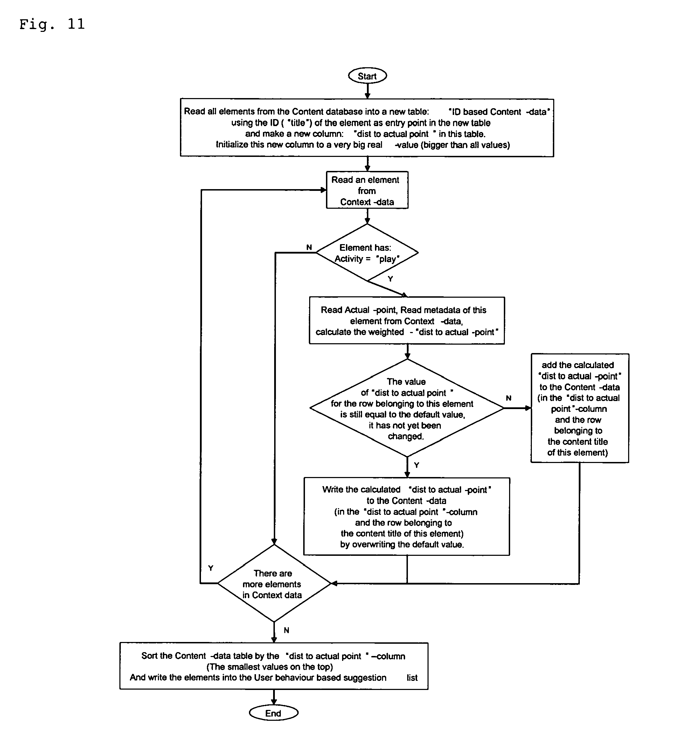

Figure 11 discloses the procedure:

- Apply a filter on the points of the context-space: only those points which have action equal to "play" is used.
- Group those points in the context-space which has equal content-identifier (equal content-title). And a weighted distance is calculated using the individual distances and the individual ratings.
- Make the suggestion list by writing the content-titles ordered by weighted distances to the actual point, the content-title having the smallest distance on the top of the list.

In one aspect of the invention the system constructs a suggestion-list which contains the content-music-titles which the actual user usually plays in the actual place and at the actual time.

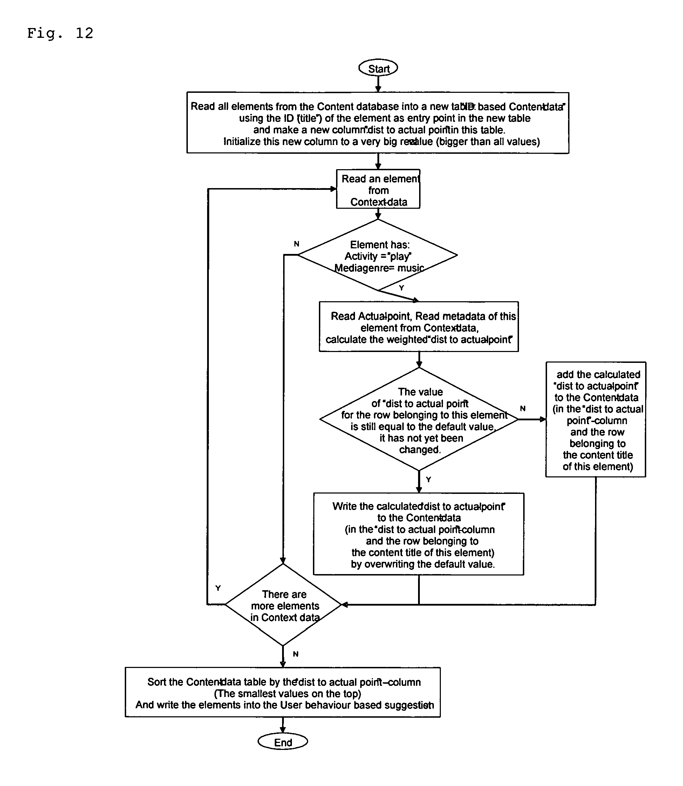

Figure 12 discloses the procedure:

- Apply a filter on the points of the context-space: only those points which have action equal to "play", and media genre equal to music, is used.
- Group those points in the context-space which has equal content-identifier (equal content-title). And a weighted distance is calculated using the individual distances and the individual ratings.
- Make the suggestion list by writing the content-titles ordered by weighted distances to the actual point, the content-title having the smallest distance on the top of the list.

To construct a suggestion list which contains the content-titles of a given media genre different from music, e.g. video, photo or web, which the actual user usually plays in the actual place and at the actual time, media genre has to be equal to the wanted media genre (video, photo, web, etc.).

This applies for use of all existing media genres.

In one aspect of the invention the system constructs a suggestion-list which contains the content-music-genres which the actual user usually plays in the actual place and at the actual time.

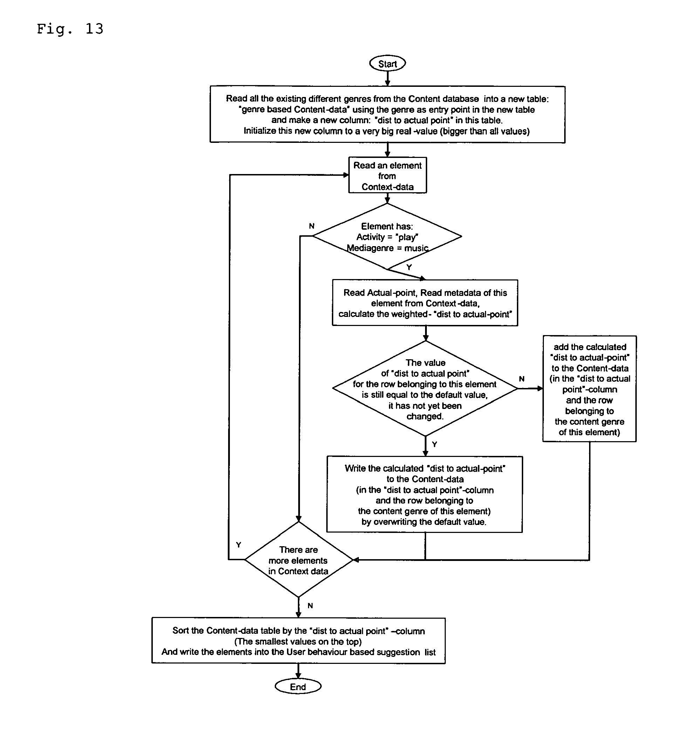

Figure 13 discloses the procedure:

- Apply a filter on the points of the context-space: only those points which have action equal to "play", and media genre equal to music, is used.
- Group those points in the context-space which has equal content-genre. And a weighted distance is calculated using the individual distances and the individual ratings.
- Make the suggestion list by writing the content-genres ordered by weighted distances to the actual point, the content-genre having the smallest distance on top of the list.

In another aspect of the invention the system constructs a suggestion list which contains the content-genre of a given media genre different from music ex. video, photo or web, which the actual user usually plays in the actual place and at the actual time. In this aspect the demanded media genre has to be equal to the wanted media genre (video, photo, web, etc.). In this case some genres have to exist for the media genre: video, photo web. It is possible to have a situation where the wanted metadata simply doesn't exist, e.g. the metadata: genre on the user's personal photos. To avoid this situation the existence of metadata in the content-database determines which kind of user behaviour based suggestion lists the system will generate.

This applies for use of all existing media genres, and is valid for all existing media genres.

In one aspect of the invention the system constructs a suggestion-list which contains the content-photo-albums which the actual user usually plays in the actual place and at the actual time.

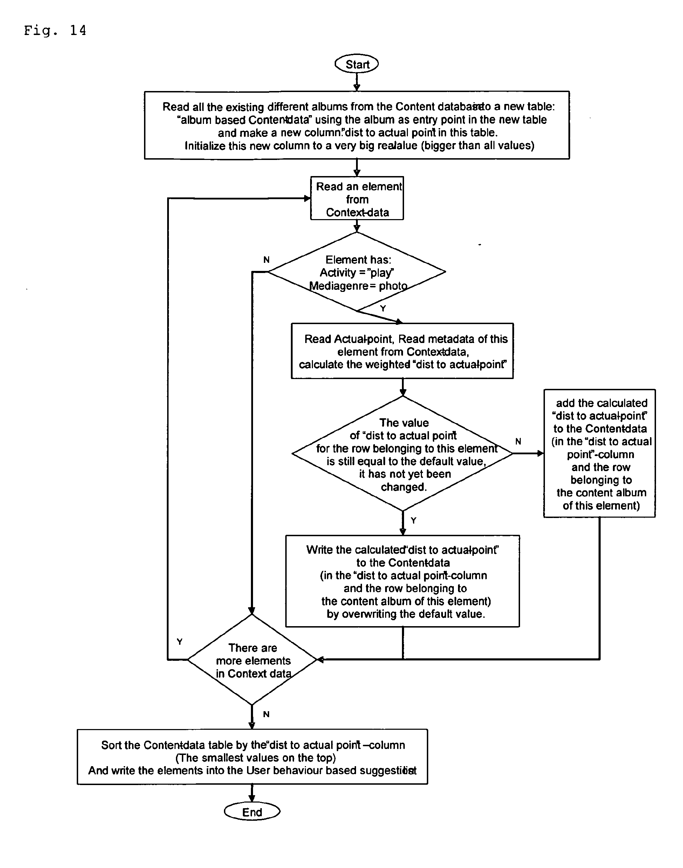

Figure 14 discloses the procedure:

- Apply a filter on the points of the context-space: only those points which have action equal to "play", and media genre equal to photo, is used.
- Group those points in the context-space which has equal content-album. And a weighted distance is calculated using the individual distances and the individual ratings.
- Make the suggestion list by writing the content-genres ordered by weighted distances to the actual point, the content-genre having the smallest distance on the top of the list.

In one aspect of the invention the system constructs a suggestion-list which contains the content-music-artists which the actual user usually plays in the actual place and at the actual time.

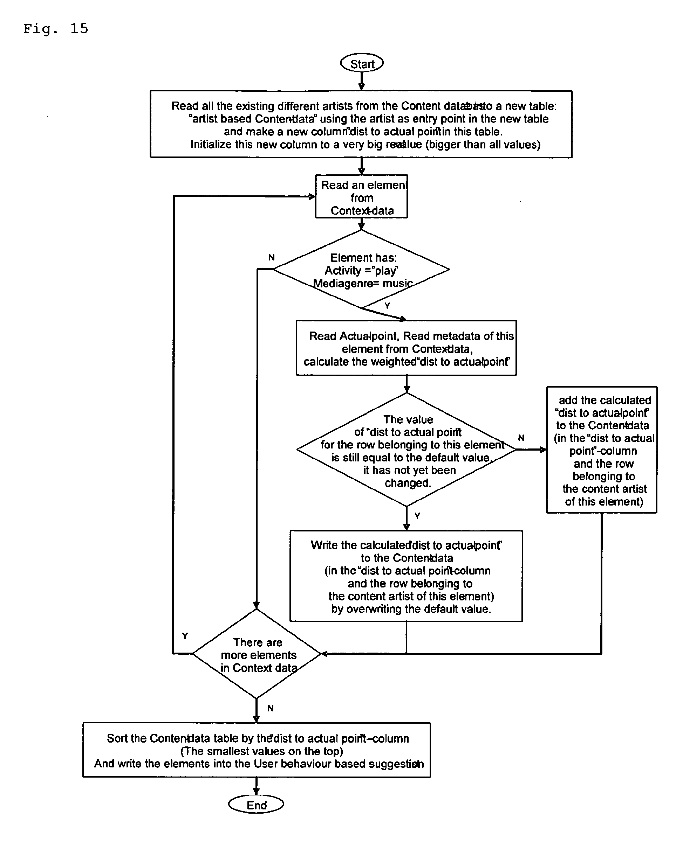

Figure 15 discloses the procedure:

- Apply a filter on the points of the context-space: only those points which have action equal to "play", and media genre equal to music, is used.
- Group those points in the context-space which has equal content-artist. And a weighted distance is calculated using the individual distances and the individual ratings.
- Make the suggestion list by writing the content-genres ordered by weighted distances to the actual point, the content-genre having the smallest distance on the top of the list.

The disclosed methods above are examples on general principle of how to generate different user behaviour based suggestion lists, just by changing the value of "preferred view" and the filter to apply on the context-space.

The applied filter methods contain both filter for metadata connected to the content-database (e.g. media genre = music, genre = rock), and filter for metadata connected to the context-database (ex. activity = play, date time = 1980, user = child).

In general the system can generate user behaviour based suggestion lists using every existing view from each database as a value of "preferred view", and as a filter as well. This means that "preferred view" can take values from { view1 ... viewX, ... viewY, ...}. And that the filter can take values of the form: { view_i = element_j of view_i}, where i and j takes all existing values. A mix of several different filters is an option to use.

To avoid errors in the calculations it is the existence of metadata in the content-database and context-database which determines which kind of user behaviour based suggestion lists the system will calculate / generate.

In that way the model is scalable, which implies that when more metadata exists this model will scale, using this new metadata automatically. New metadata means that new columns will appear in the content-database or in the context-database. Or new elements will appear in an existing column.

The different suggestions lists can tell the system something about the habits of the user when the user is playing content, what content the user usually plays in which places and at which time of the day and night, but not only that. It also tells the system something about how the user usually selects the content.

This kind of information can help the system to find some content which is relevant for the user, additionally it can help the system to change the content manager, to change the way the system serves the content for the user. E.g. changing the content-navigator, adding something to the content-navigator and in this mode the system is able to adapt to the user, instead of forcing the user to adapt to the system.

In one aspect of the invention life sculpture based suggestion lists might be calculated based on an actual context point defined by: the user id, the actual place, and the actual date time.

In the preferred embodiment of the invention every point in the Life Sculpture-space has the following attributes: a) Sculpturing the experience-pattern: [wanted music-genre, wanted-movie-genre, wanted-TV-programme-genre, wanted action = {play, standby, etc.}, wanted-media genre and b) Sculpturing the interaction-pattern:

Wanted content manager mode, wanted-inspire-mode (not in use, small-suggestion-list, big-suggestion-list (with seed-function), auto-play first suggestion in small-pip, auto-play first suggestion in medium-pip, auto-play first suggestion in big-pip, etc.), and preferred LAI level (learning-only, learning-and-acting), want-to-be-surprised (yes, no), etc.

In one aspect of the invention EPG suggestion lists can be generated, based on the data that the system gets from the electronic program guide (EPG).

This information is placed as points in an EPG-space, which as an example is defined by the axis: Time, Program-Genre, and TV-channel.

Where the time-axe is a real-number-axe containing the time, the program-genre-axe is an axe of discrete values, which are all existing program-genre which can be found in EPG-metadata and where the TV-channel-axe is an axe of discrete values, which are all existing TV-channels which can be found in EPG-metadata.

A metric is put on the EPG-space, using the same principles as used for the metric of the context-space. The metric-constant(s) of the TV-channel-axe are bigger than the metric-constant(s) of the program-genre-axe, which again are bigger than the metric-constant of the time-axe. Online analysis of the content-space and the EPG-space can change all the metric-constants (calibrate the metrics).

The actual point is (t, p, ch) where t is the actual time, p and ch is found by:

Create the user behaviour based suggestion list with activity = play, media genre = TV-tuner or media genre = v-memory or media genre = movie.

Identifying p is obtained by running through the elements of this suggestion list starting from the top and looking at the value of the metadata genre of all the elements (this is found in the content-database). The first found genre which is equal to one of the existing genres from the EPG, is used as a value for p.

Identifying ch is obtained by running through the elements of this suggestion list starting from the top and looking at the value of the metadata: 'TV-channel' of all the elements (this is found in the content-database). The first found TV-channel which is equal to one of the existing TV-channels from the EPG, is used as a value for ch.

Some elements might have the value 'no TV-channels' metadata, e.g. if it is a movie or video memory resident data (v-mem) not recorded via a TV-tuner).

The actual point is a point in the EPG-space and it's possible for all the existing points in the EPG-space to calculate the distance between any points and the actual point using the metric of the EPG-space. Thus each point in the EPG-space now has a distance to the actual point, and an EPG-entry identifier. This identifier is used to get information about the actual programme in the EPG, e.g. a: title, programme-genre, TV-station, start-time, end-time, web-page, and others.

Several different EPG-suggestion lists exist as options, but only the preferred view = 'title' is relevant.

The variation is in the filter, and e.g. a requirement could be that the start-time should be within the interval: [0; x] minutes from now (x=30 or x=15, or other).

For every suggestion in the resulting EPG-suggestion list it must be possible for the user to receive the signal from the broadcaster. Thus the system uses a TV-station-filter, e.g. TV-station = DR or TV-station = TV2 or TV-station = DR2.

The procedure is:

- Apply a filter on the points of the EPG-space: only those points which have the start-time in the wanted interval, is used, and only those points which fulfils the TV-station-filter is used.
- Calculate the distance from each point in the EPG-space to the actual point.
- Make the EPG-suggestion list by writing the titles ordered by the distances to the actual point, the title having the smallest distance on the top of the list.

The model is scalable. In the future when more metadata is required from the EPG, then the model is extended to use those new metadata as well. This will result in new filters and new possibilities of use, and new views for the user.

In yet another aspect of the invention the system has a continuously update mode of the suggestion lists. When the context has changed all the suggestion lists has to be updated / recalculated. As examples of potential triggers of this update mode following events apply: a) when another user enters the room b) when a user moves to another room, c) when a user grabs the remote control device , d) when another user takes control, e) when a user leaves the room (or the house),f) when the time shifts to another time interval, g) when the ambience of the room changes (light-setting and or HT-setting), h) when the mood of the user chances, i) when the interests of the user chances, j) when a source in the system becomes locked, k) when the user controls the system / interacts with the system (press a key on the remote, moves the free cursor, talks to the system, gesticulate ), l) when an automatic system-function starts / stops and m) when a new source / product is added to / removed from the system (or power up / down in the system), and others.

In yet another aspect of the invention an adaptive mode of operation is obtained, which mode is dynamic and where the system continuously adopts knowledge about the user that navigates in an actual context.

The basic data for the system to adapt to the user is found in the accumulated data in the suggestion lists. The type of experiences the system might deduce over time is: a) during the user interaction with the system, where a traditional navigation is applied, the system can propose qualified suggestions to the expected next step from the user, b) the content manager will adapt to the user behaviour, c) the Inspiration list might expand, or become shorter or completely disappear if its not used, d) in fact all user entry dialogs might change

The accumulated data in suggestion lists are based on a) User behaviour based suggestion lists, which are built on different combination of "preferred view" and none, one or several filters, and b) Life Sculpture based suggestion list and c) EPG suggestion lists.

In addition to those suggestion lists created, some "last used" lists are required. From the context-database it is possible and easy to create a list containing the last used content on a given product, and a list containing the last recorded / downloaded content.

In addition to those suggestion lists created an 'actual mate experience list' can be generated. This might be obtained if the system is connected to a dedicated internet server service, and if a friend of the user also has a system which is connected to the same internet service, then it is possible for those two friends to recommend an experience to each other, encouraging each other to share an experience.

All of the suggestion lists can contain none, one or several suggestions, depending of the situation. As soon as the situation has changed e.g. trigged by a change in the content-database, the context-database, the Life Sculpture, the EPG, a dedicated-internet service-information, or a changed in time, those lists which are depending on the parameter which has changed is recalculated and rebuilt.

In addition to those primary suggestion lists created, some more supplemental information is collected into data sets:

a) 'Similar to' list. By taking an element from the primary list and then finding some content which is similar to this element and adding this to the list it constitutes the "Similar to" list. For each media genre the criteria for "what is similar to" is predefined. For instance: for the media genre 'music' the MOTS (More-Of-The-Same) calculations is executed.

b) 'Not Similar to' list. By taking an element from the primary list and then finding some content which is absolutely not similar to this element, and adding this to the list it constitutes the "Not Similar to" list. In some situations the same definition used to define what is similar to can be used to define what is not similar to. For instance: for the media genre 'music' we the MOTS is executed.

c) 'Associated to' list. By taking an element from the primary list and then finding some content which is associated to this element, and adding this to the list it constitutes 'Associated to' list. In this situation a process finding content which is associated to the primary element is required. As an example the primary element is a movie, associated to this is: 1) a web-page which is the home-page of one of the actors in the movie. 2) a music track in the user's collection written by the same artist who has written the soundtrack of the movie. 3) a TV-programme found in the EPG, containing an interview of the director of the movie. 4) a web-page containing information about another new movie directed by the same director. 5) a web-page containing a description of the movie: the story, and the actors.

Not all of the Suggestion lists have supplementary lists attached. E.g. if preferred-view = action, then the list contains e.g. the suggestions: play, grab, throw, and communicate. The supplementary lists cannot be generated to this User behaviour based suggestion list.

According to one aspect of the invention the identified user experiences, recorded actions and events constitutes a number of variables in a problem domain where the solution space is defined by means of relations among the variables.

Said relations are defined as constraints in terms of definitions of legal combinations, where said constraints define conclusions on specific premises that might occur. Said relations can be defined as legal combinations or as illegal combinations as appropriate and is organized as relations among variables in the general mathematical notation of 'Disjunctive Form':

AttribVariable 1.1 and AttribVariable 1.2 and AttribVariable 1.3 and AttribVariable 1.n

Or AttribVariable 2.1 and AttribVariable 2.2 and AttribVariable 2.3 and AttribVariable 2.n

Or ....

Or ....

Or AttribVariable m.1 and AttribVariable m.2 and AttribVariable m.3 and AttribVariable m.n

An alternatively definition term is the 'Conjunctive Form':

AttribVariable 1.1 or AttribVariable 1.2 or AttribVariable 1.3 or AttribVariable 1.n

And AttribVariable 2.1 or AttribVariable 2.2 or AttribVariable 2.3 or AttribVariable 2.n

And ....

And ....

And AttribVariable m.1 or AttribVariable m.2 or AttribVariable m.3 or AttribVariable m.n

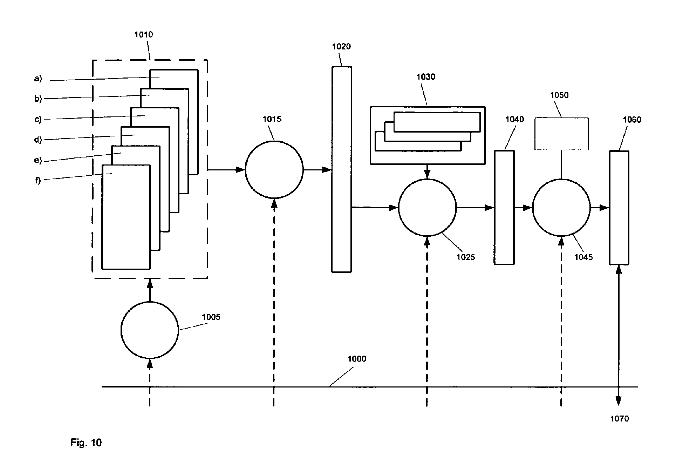

Fig 10 displays how said relations can be defined in one single constraint table or in two or more constraint tables (1030) where common variables from table to table secure logical consistency across the entire problem domain.

With this method of defining the problem domain, it becomes multi-dimensional enabling easy, fast and direct access by means of a search algorithm (1025) to any point in the defined set of solutions.

Another aspect of the invention is that said relations as defined in one or more tables (1030), might be reloaded from an external data source which enables a very flexible redefinition of the premises and conclusions that's applied in generating the Inspire list.

According to the invention the problem solver engine (1025) proceeds in finding the result (1040) by a search into the set of legal combinations (1030). According to definitions made in the constraint tables (1030) the result might be an optimized list of variables (1040) required to generate the Inspire list (1060);

Figure 10 displays one embodiment of the invention. The application (1000) controls the recording and organizing of the user experiences and system use by archiving (1005) into the suggestion data set (1010) : a) user behaviour based suggestions; b) life sculpture based suggestions; and c) EPG suggestions and recorded transactions: d) last experienced, e) actual mate experience, f) last recorded / downloaded.

The validation of the dataset in the suggestion data set (1010) is executed in a three step procedure, the first step (1015) being the creation of a list variables (1020) extracted from the suggestion data set (1010) containing the relevant parameters that influences the content of the Inspire list (1040,1060). The second step in the procedure is to calculate what the relevant conclusions are, those conclusions being made based on the defined set of constraints (1030) and interrogated by the search engine (1025), and the conclusion to be stored as a list of variables that constitutes the raw unsorted Inspire list. The third step in the procedure is to sort and order (1045) the Inspire list parameters according to predefined presentation requirements (1050) to obtain the final and ordered list (1060), to support ease of use and user access via the application user interface (1070).

As an example of constraint definitions of deducing a conclusion from the premises in a number 'n' of suggestions lists containing a number of 'm' suggestions this implies a total number of n*m suggestions. These are named by their origin suggestion list, and with two attributes: "existence" and "priority" (if the origin suggestion list is a "similar to" or "not similar to" which is calculated by e.g. MOTS, then a third attribute exist, named "source", to tell the system which source is to be used as the basic for the MOTS calculation).

In the preferred embodiment of the invention an example of the constraint table which is used to built the Inspire list is based on data from three suggestion lists: a) "user behaviour based suggestions", view = "title", filter: activity = "play", and b) "similar to ..." this is MOTS-calculations on the first suggestion from list 1, and c) "EPG suggestions", genre = "news". The constraint table is exemplified with the primary parameters interesting for this example:

| Line # | Cursor On level | Cursor On Media genre | 11 E | 11 P | 12 E | 12 P | 21 E | 21 P | 22 E | 22 P | 23 E | 23 P | 31 E | 31 P | 32 E | 32 P |
|---|---|---|---|---|---|---|---|---|---|---|---|---|---|---|---|---|
| 1 | none | none | 1 | 1 | | | 1 | 2 | 1 | 3 | | | 1 | 4 | 1 | 5 |
| 2 | none | none | 1 | 1 | 1 | 2 | 1 | 3 | 1 | 4 | | | 1 | 5 | 0 | 0 |
| 3 | none | none | 1 | 1 | 1 | 2 | 1 | 3 | 1 | 4 | 1 | 5 | 0 | 0 | 0 | 0 |

| | | |
|---|---|---|
| 1 1 E | List 1 suggestion 1 existence | the existence of suggestion 1 in the suggestion list 1 |
| 1 1 P | List 1 suggestion 1 priority | the priority of suggestion 1 in the suggestion list 1 |
| 1 2 E | List 1 suggestion 2 existence | the existence of suggestion 2 in the suggestion list 1 |
| 1 2 P | List 1 suggestion 2 priority | the priority of suggestion 2 in the suggestion list 1 |
| Etc. | | |

Line #1:

The product is ready to be used. The user has not selected anything yet.

The resulting Inspire list is (storing the 5 elements with P=1 to 5 into a list, ordered by P): {numb-1 from list 1; numb-1 from list 2, numb-2 from list 2, numb-1 from list 3, and numb-2 from list 3}.

Line # 2:

This displays the same principle as line # 1, but having only one suggestion in the EPG suggestion list. The resulting Inspire list is: {numb-1 from list 1; numb-2 from list 1, numb-1 from list 2, numb-2 from list 2, and numb-1 from list 3}

Line # 3:

The same as for line # 1, but now there doesn't exist any suggestion in the EPG suggestion list. The resulting Inspire list is: {numb-1 from list 1; numb-2 from list 1, numb-1 from list 2, numb-2 from list 2, and numb-3 from list 2}

In the continuous operation the user starts to search for some music. In the traditional navigator the user sets the cursor on media genre = "music". Consequently the system requires two additional suggestion lists: a) "user behaviour based suggestions", view = "title", filter: activity = "play", media genre = "music" and b) "similar to ..." this is MOTS-calculations on the first suggestion from list 4. The constraint table is exemplified with the primary parameters interesting for this extended example:

| Line # | Cursor On level | Cursor On Media Genre | 41 E | 41 P | 42 E | 42 P | 51 E | 51 P | 52 E | 52 P | 53 E | 53 P | 31 E | 31 P | 32 E | 32 P |
|---|---|---|---|---|---|---|---|---|---|---|---|---|---|---|---|---|
| 4 | 1 | Music | 1 | 1 | | | 1 | 2 | 1 | 3 | | | 1 | 4 | 1 | 5 |
| 5 | 1 | Music | 1 | 1 | 1 | 2 | 1 | 3 | 1 | 4 | | | 1 | 5 | 0 | 0 |
| 6 | 1 | Music | 1 | 1 | 1 | 2 | 1 | 3 | 1 | 4 | 1 | 5 | 0 | 0 | 0 | 0 |

Line # 4:

The user has placed the cursor (traditional navigation) on music. The resulting Inspire list is (storing the 5 elements with P=1 to 5 into a list, ordered by P): {numb-1 from list 4; numb-1 from list 5, numb-2 from list 5, numb-1 from list 3, and numb-2 from list 3}

Line # 5:

This displays the same principle as line # 4, but now there only exists one suggestion in the EPG suggestion list. The resulting Inspire list is: {numb-1 from list 4; numb-2 from list 4, numb-1 from list 5, numb-2 from list 5, and numb-1 from list 3}.

Line # 6:

The same as for line #4, but now there doesn't exist any suggestion in the EPG suggestion list. The resulting Inspire list is: {numb-1 from list 4; numb-2 from list 4, numb-1 from list 5, numb-2 from list 5, and numb-3 from list 5}.


## Claims

1. A method of sharing information between a first and a second user, the method comprising:

    - a first information system providing to the first user a list of events available to the first user,
    - the second user identifying an event and informing the first information system thereof, and
    - the first information system updating the list of events by including the identified event in the list of events and providing the updated list to the first user.

2. A method according to claim 1, wherein the informing step comprises transmitting information relating to the identified event to a communication device, and the transmission of information relating to the identified event from the communication device to the information system.

3. A method according to claim 1 or 2, wherein a plurality of information systems transmit information to or receive information from the communication device.

4. A method according to any of claims 1-3, wherein the informing step comprises the second user identifying the first user.

5. A method according to any of the preceding claims, wherein the identifying step comprises the second user entering information into a second communication system adapted to transmit information to the first information system.

6. A method according to any of the preceding claims, wherein the step of providing the updated list comprises informing the first user of the fact that the identified event has been identified by the second user.

7. A method according to any of the preceding claims, wherein:

    - the step of providing the list of events comprises providing information relating to a number of events available to the user and generating the list by selecting, based on predetermined parameters, events from the number of events, and where
    - the updating step comprises determining, based on the predetermined parameters, whether to include the event on the list or not.

8. A method according to any of the preceding claims, wherein the updating step comprises determining, for each event available to the user, a priority, and providing as the list a list comprising all events or all events having a priority higher than a predetermined lowest priority.

9. A method according to any of the preceding claims, wherein the identifying step comprises the second user experiencing the event by receiving information relating to the event from an external source, the updating step being succeeded by the step of the first user receiving information from the external source and experiencing the event.

10. A method according to any of the preceding claims, the method comprising the subsequent steps of the user selecting an event from the list of events, and an AV system is controlled to provide the event to the user.

11. A system for sharing information between a first and a second user, the system comprising:

- a first information system adapted to provide a list of events available to the first user,
- a second information system adapted to have an event identified by the second user and to inform the first information system thereof, and
- the first information system comprising means for updating the list of events by including the identified event in the list of events and to provide the updated list.

**12.** A system according to claim 11, further comprising a communication device, the second information system being adapted to transmit information relating to the event to the communication device, and the communication device being adapted to transmit information relating to the event to the first information system.

**13.** A system according to claim 11 or 12, comprising a plurality of information systems adapted to transmit information to or receive information from the communication device.

**14.** A system according to any of claims 11-13, wherein the second information system is adapted to also transmit information relating to the identity of the first user.

**15.** A system according to any of claims 11-14, wherein the first information system is adapted to, when providing the updated list, indicate to the first user the fact that the identified event has been identified by the second user.

**16.** A system according to any of claims 11-15, wherein the first information system is adapted to:

- provide information relating to a number of events available to the user and generate the list by selecting, based on predetermined parameters, events from the number of events, and where
- determine, based on the predetermined parameters, whether to include the event on the list in an updated list or not.

**17.** A system according to any of claims 11-16, wherein the updating means are adapted to determine, for each event available to the user, a priority, and to provide as the list a list comprising all events or all events having a priority higher than a predetermined lowest priority to the user.

**18.** A system according to any of claims 11-17, wherein the second information system is adapted to identify events received from an external source, the updating means comprising updating the list only when receiving information from the external source that the event is available.

**19.** A system according to any of claims 11-18, further comprising means for controlling an AV system to provide the user with an event, selected by the user, from the list of events.

**20.** A method of providing information to a user, the method comprising:

1. collecting, prior to a predetermined point in time, information relating to events a user experiences and in which environment, the user was, when these events were experienced,
2. at the predetermined point in time:

- determining in which environment the user is,
- determining a number of events available to the user,
- providing, as the information, selected events of the determined events, the selection being performed on the basis of the determined environment, and the collected information.

**21.** A method according to claim 20, wherein the step of providing the selected events comprises:

- for each of the determined events, provide a priority estimate on the basis of:

- a quantification, for each of one or more events of the collected data, of a difference between the environment in which the user was when experiencing the event of the collected data and the determined environment,
- a quantification, for each of the one or more events of the collected data, of a similarity between a subject, genre, type, and/or theme of the event of the collected data and of the determined event,

- provide only available events having a priority estimate higher than a predetermined lowest priority.

22. A method according to claim 20 or 21, wherein the environment relates at least partly to a room/venue/forum in which the user is/was present, the method further comprising performing step 2. when the user changes room/venue/forum.

23. A method according to claim 22, wherein different rooms/venues/forum are different rooms in a house, a house, a summer house, a car, a persons place or work, or generally when the person is "on the road".

24. A method according to any of claims 20-23, wherein the environment comprises a time of day, the week, the month, and/or the year of experiencing the event(s) and wherein:

- step 1. comprises determining, for each of one or more of the events of the collected data, a time of the day, the week, the month, and/or the year of experiencing the event,
- step 2. comprises determining an actual time of the day, the week, the month, and/or the year, and wherein the step of providing the selected events comprises:
- for each of the determined events, provide a priority estimate on the basis of:

- a quantification, for each of the one or more events of the collected data, of a difference between the actual time of the day/week/month/year and the time of day/week/month/year of the event of the collected data,
- a quantification, for each of the one or more events of the collected data, of a similarity between a subject, genre, type, and/or theme of the event of the collected data and of the determined event,

- provide only available events having a priority estimate higher than a predetermined lowest priority.

25. A method according to any of claims 20-24, wherein:

- step 1. comprises determining, for each of one or more of the events of the collected data and as at least part of the environment, information relating to the weather at the point in time of experiencing the event,
- step 2. comprises determining information relating to the actual weather, and wherein the step of providing the selected events comprises:

- for each of the determined events, provide a priority estimate on the basis of:

- a quantification, for each of the one or more events of the collected data, of a difference between the actual weather and the weather at the time of experiencing the event of the collected data,
- a quantification, for each of the one or more events of the collected data, of a similarity between a subject, genre, type, and/or theme of the event of the collected data and of the determined event,

- provide only available events having a priority estimate higher than a predetermined lowest priority.

26. A method according to any of claims 20-25, wherein:

- step 1. comprises determining, for each of one or more of the events of the collected data and as at least part of the environment, information relating to how many other persons were with the user when experiencing the event,
- step 2. comprises determining information relating to how many persons are with the user, and wherein the step of providing the selected events comprises:

- for each of the determined events, provide a priority estimate on the basis of:

- a quantification, for each of the one or more events of the collected data, of a difference between the determined number of persons and the number of persons with the person at the time of experiencing the event of the collected data,
- a quantification, for each of the one or more events of the collected data, of a similarity between a subject, genre, type, and/or theme of the event of the collected data and of the determined event,

- provide only available events having a priority estimate higher than a predetermined lowest priority.

27. A method according to any of claims 20-26, wherein:

- step 1. comprises determining, for each of one or more of the events of the collected data and as at least part of the environment, information relating to a lighting setting, room temperature, and/or a audio/speaker setting when experiencing the event,
- step 2. comprises determining information relating to an actual lighting or audio/speaker setting, and/or room temperature, and wherein the step of providing the selected events comprises:

- for each of the determined events, provide a priority estimate on the basis of:

- a quantification, for each of the one or more events of the collected data, of a difference between the room temperature and/or lighting/audio/speaker setting when experiencing the event of the collected data and the actual room temperature or lighting or speaker setting,
- a quantification, for each of the one or more events of the collected data, of a similarity between a subject, genre, type, and/or theme of the event of the collected data and of the determined event,

- provide only available events having a priority estimate higher than a predetermined lowest priority.

28. A method according to any of claims 20-27, wherein:

- step 1. comprises determining, for each of one or more of the events of the collected data and as at least part of the environment, information relating to a mood of the user when experiencing the event,
- step 2. comprises determining information relating to an actual mood of the person, and wherein the step of providing the selected events comprises:

- for each of the determined events, provide a priority estimate on the basis of:

- a quantification, for each of the one or more events of the collected data, of a difference between the user's mood when experiencing the event of the collected data and the actual mood of the user,
- a quantification, for each of the one or more events of the collected data, of a similarity between a subject, genre, type, and/or theme of the event of the collected data and of the determined event,

- provide only available events having a priority estimate higher than a predetermined lowest priority.

29. A method according to any of claims 20-28, the method comprising the subsequent steps of the user selecting an event from the provided information, and an AV system is controlled to provide the event to the user.

30. A system for providing information to a user, the system comprising:

- first means for collecting, prior to a predetermined point in time, information relating to events a user experiences and in which environment the user was, when these events were experienced,
- second means for, at the predetermined point in time:

- determining in which environment the user is,
- determining a number of events available to the user,
- providing as the information, selected events of the determined events, the selection being performed on the basis of the determined environment and the collected information.

31. A system according to claim 30, wherein the means for providing the selected events comprises:

- means for, for each of the number of determined events available to the user, provide a priority estimate on the basis of:

- a quantification, for each of one or more of the events of the collected data, of a difference between the environment in which the user was when experiencing the event and the determined environment,
- a quantification, for each of the one or more events of the collected data, of a similarity between a subject, genre, type, and/or theme of the event of the collected data and of the determined event,

the providing means being adapted to provide only available events having a priority estimate higher than a predetermined lowest priority.

**32.** A system according to claim 30 or 31, wherein the second means are adapted to perform the quantification and providing steps when the user changes room/venue/forum.

**33.** A system according to any of claims 30-32, wherein different rooms/venues/forum are different rooms in a house, a house, a summer house, a car, a persons place or work, or generally when the person is "on the road".

**34.** A system according to any of claims 30-33, wherein:

- the collecting means are adapted to determine, for each of one or more of the events of the collected data and as at least part of the environment, a time of the day, the week, the month, and/or the year of experiencing the event,
- the second means are adapted to determine an actual time of the day, the week, the month, or the year, and comprise means for, for each of the number of determined events available to the user, provide a priority estimate on the basis of:

  - a quantification, for each of the one or more of the events of the collected data, of a difference between the determined actual time of the day, the week, the month, and/or the year and the time of the day, the week, the month, and/or the year at which the user was when experiencing the event,
  - a quantification, for each of the one or more events of the collected data, of a similarity between a subject, genre, type, and/or theme of the event of the collected data and of the determined event,

the providing means being adapted to provide only available events having a priority estimate higher than a predetermined lowest priority.

**35.** A system according to any of claims 30-34, wherein:

- the collecting means are adapted to determine or receive, for each of one or more of the events of the collected data and as at least part of the environment, information relating to the weather at the point in time of experiencing the event,
- the second means are adapted to determine or receive information relating to the actual weather, and comprise means for, for each of the number of determined events available to the user, provide a priority estimate on the basis of:

  - a quantification, for each of the one or more of the events of the collected data, of a difference between weather at the experiencing of the event of the collected data and the actual weather,
  - a quantification, for each of the one or more events of the collected data, of a similarity between a subject, genre, type, and/or theme of the event of the collected data and of the determined event,

the providing means being adapted to provide only available events having a priority estimate higher than a predetermined lowest priority.

**36.** A system according to any of claims 30-35, wherein:

- the collecting means are adapted to determine or receive, for each of one or more of the events of the collected data and as at least part of the environment, information relating to how many other persons were with the user when experiencing the event,
- the second means are adapted to determine or receive information relating to how many persons are with the user, and comprise means for, for each of the number of determined events available to the user, provide a priority estimate on the basis of:

  - a quantification, for each of the one or more of the events of the collected data, of a difference between the number of persons that were with the user when experiencing the event of the collected data and the actual number of persons with the user,

- a quantification, for each of the one or more events of the collected data, of a similarity between a subject, genre, type, and/or theme of the event of the collected data and of the determined event,

the providing means being adapted to provide only available events having a priority estimate higher than a predetermined lowest priority.

**37.** A system according to any of claims 30-36, wherein:

- the collecting means are adapted to determine or receive, for each of one or more events of the collected data and as at least part of the environment, information relating to a room temperature, a lighting setting and/or a speaker/audio setting when experiencing the event,
- the second means are adapted to determine or receive information relating to an actual room temperature and/or lighting setting and/or speaker/audio setting, and comprise means for, for each of the number of determined events available to the user, provide a priority estimate on the basis of:

- a quantification, for each of the one or more of the events of the collected data, of a difference between the room temperature/lighting setting/speaker setting when experiencing the event of the collected data and the actual room temperature/lighting setting/speaker/audio setting,
- a quantification, for each of the one or more events of the collected data, of a similarity between a subject, genre, type, and/or theme of the event of the collected data and of the determined event,

the providing means being adapted to provide only available events having a priority estimate higher than a predetermined lowest priority.

**38.** A system according to any of claims 30-37, wherein:

- the collecting means are adapted to determine or receive, for each of one or more of the events of the collected data and as at least part of the environment, information relating to a mood of the user when experiencing the event,
- the second means are adapted to determine or receive information relating to an actual mood of the user, and comprise means for, for each of the number of determined events available to the user, provide a priority estimate on the basis of:

- a quantification, for each of the one or more of the events of the collected data, of a difference between the user's mood when experiencing the event of the collected data and the actual mood of the user,
- a quantification, for each of the one or more events of the collected data, of a similarity between a subject, genre, type, and/or theme of the event of the collected data and of the determined event,

the providing means being adapted to provide only available events having a priority estimate higher than a predetermined lowest priority.

**39.** A system according to any of claims 30-38, further comprising means for controlling an AV system to provide the user with an event, selected by the user, from the provided information.

Fig. 1

Fig. 2

Place

Living room

☆ { content, action }

User1

User

12:00

Time

$$dist = \sqrt[n]{\sum_{n}^{i=1} (dist_i)^2}$$

The distance (dist) between two points in the context room is calculated based
upon the individual distances (*dist<sub>i</sub>*) of the relevant points of coordinates

Fig. 3

**An example of distance calculation:**

The calculation of the distance between two points in the context room marked with an * is:

Dist user    is the projection on the user - axis
Dist place  is the projection on the place - axis
Dist time    is the projection on the time - axis

In the 3-dimensional example the calculation is:

$$dist = \sqrt{(dist_{user})^2 + (dist_{place})^2 + (dist_{time})^2}$$

Fig. 4

**Applied Metrics in the context-room:**

Metrics on the User-axis:

Place

UnknownUser    User1    User2    User3    User4 ...                    User

$i \neq j$:                 $Dist(user_i, user_j) = UserConstant$

$i = j$:                  $Dist(user_i, user_j) = 0$

$i \neq UnknownUser$:   $Dist(UnknownUser, user_i) = UnknownUserConstant$

Time

Fig. 5

Fig. 6

**Applied Metrics in the context-room:**

Metrics on the Time-axis:

If $|time_i - time_j| > 3$      $Dist(time_i, time_j) = TimeOfDayConstant$

Else:                         $Dist(time_i, time_j) = 0$

Fig. 7

**Applied Metrics in the context-room:**

Metrics on the TimeOfWeek-axis:

$i \neq j$: $Dist(timeOfWeek_i, timeOfWeek_j) = TimeOfWeekConstant$

$i = j$: $Dist(timeOfWeek_i, timeOfWeek_j) = 0$

Fig. 8

**Applied Metrics in the context-room:**

Metrics on the TimeOfHist-axis:

Place

User

TimeOfHist1

TimeOfHist2

TimeOfHist

$i \neq j$: $\quad \text{Dist(timeOfHist}_i, \text{timeOfHist}_j) = \text{TimeOfHistConstant} * (|j-i|)$

$i = j$: $\quad \text{Dist(timeOfHist}_i, \text{timeOfHist}_j) = 0$

The scaling on the TimeOfHist-axis might be:

Year and month:    2004-11, 2004-12, 2005-01, 2005-02, 2005-03, ...more

Or just Year:   2003, 2004, 2005, ....more

Fig. 9

Fig. 10

Fig. 11

```
                              ( Start )
                                 |
                                 v
+-----------------------------------------------------------------------+
| Read all elements from the Content database into a new table:         |
|                          "ID based Content -data"                     |
|     using the ID ( "title") of the element as entry point in the new  |
|                               table                                   |
|       and make a new column:  "dist to actual point " in this table.  |
|   Initialize this new column to a very big real  -value (bigger than  |
|                          all values)                                  |
+-----------------------------------------------------------------------+
                                 |
                                 v
                        +------------------+
                        | Read an element  |
                        |     from         |
                        |  Context -data   |
                        +------------------+
                                 |
                                 v
                    N  < Element has:          >
                  <------< Activity = "play" >
                            < Y >
                              |
                              v
           +-------------------------------------------+
           | Read Actual -point, Read metadata of this |
           |       element from Context -data,         |
           |  calculate the weighted - "dist to actual |
           |                -point"                    |
           +-------------------------------------------+
                              |
                              v
               <   The value                  >
               < of "dist to actual point "   >     +---------------------+
               < for the row belonging to this>  N  | add the calculated  |
               < element is still equal to the>---->| "dist to actual     |
               < default value, it has not yet>     | -point" to the      |
               < been changed.                >     | Content -data       |
                              |                     | (in the "dist to    |
                              v Y                    | actual point"-column|
           +-------------------------------------+   | and the row         |
           | Write the calculated  "dist to      |   | belonging to        |
           |      actual -point" to the Content  |   | the content title   |
           |           -data                     |   | of this element)    |
           | (in the "dist to actual point       |   +---------------------+
           |     "-column and the row belonging  |
           |     to the content title of this    |
           |     element) by overwriting the     |
           |            default value.           |
           +-------------------------------------+
                              |
         Y      < There are         >
      <---------< more elements     >
                < in Context data   >
                       | N
                       v
+-----------------------------------------------------------------------+
| Sort the Content -data table by the "dist to actual point " --column  |
|                   (The smallest values on the top)                    |
|  And write the elements into the User behaviour based suggestion list |
+-----------------------------------------------------------------------+
                       |
                       v
                    ( End )
```

Fig. 12

```
                              ( Start )
                                  |
                                  v
+----------------------------------------------------------------------+
| Read all elements from the Content database into a new table based   |
| Contentdata using the ID (title) of the element as entry point in    |
| the new table and make a new column dist to actual point in this     |
| table.                                                               |
| Initialize this new column to a very big value (bigger than all      |
| values)                                                              |
+----------------------------------------------------------------------+
                                  |
                                  v
                         +------------------+
                         |  Read an element |
              +--------->|      from        |
              |          |   Contextdata    |
              |          +------------------+
              |                   |
              |                   v
              |          /------------------\
              |     N   /   Element has:     \
              +--------<    Activity ="play"  >
              |         \  Mediagenre= music /
              |          \------------------/
              |                   | Y
              |                   v
              |          +----------------------------+
              |          | Read Actualpoint, Read     |
              |          | metadata of this element   |
              |          | from Contextdata,          |
              |          | calculate the weighted     |
              |          | dist to actualpoint        |
              |          +----------------------------+
              |                   |
              |                   v
              |          /----------------------\      +------------------+
              |         /     The value          \     | add the calculated|
              |        /   of dist to actual point\  N | dist to actualpoint|
              |       <  for the row belonging to  >-->| to the Contentdata|
              |        \ this element is still equal/   | (in the dist to   |
              |         \ to the default value,    /    | actual point-     |
              |          \it has not yet been      /    | column and the row|
              |           \    changed.           /     | belonging to      |
              |            \-------------------/         | the content title |
              |                   | Y                    | of this element)  |
              |                   v                      +------------------+
              |          +----------------------------+          |
              |          | Write the calculated dist  |          |
              |          | to actualpoint             |          |
              |          | to the Contentdata         |          |
              |          | (in the dist to actual     |          |
              |          | point-column               |          |
              |          | and the row belonging to   |          |
              |          | the content title of this  |          |
              |          | element)                   |          |
              |          | by overwriting the default |          |
              |          | value.                     |          |
              |          +----------------------------+          |
              |                   |                               |
              |    Y     /------------------\                     |
              +---------<    There are       <--------------------+
                        \  more elements      \
                        /  in Context data    /
                         \------------------/
                                  | N
                                  v
+----------------------------------------------------------------------+
| Sort the Contentdata table by the dist to actual point-column        |
| (The smallest values on the top)                                     |
| And write the elements into the User behaviour based suggestion      |
+----------------------------------------------------------------------+
                                  |
                                  v
                              (  End  )
```

Fig. 13

```
                              ( Start )
                                  │
                                  ▼
┌────────────────────────────────────────────────────────────────────┐
│  Read all the existing different genres from the Content database    │
│  into a new table:                                                   │
│  "genre based Content-data" using the genre as entry point in the    │
│  new table                                                           │
│  and make a new column: "dist to actual point" in this table.        │
│  Initialize this new column to a very big real -value (bigger than   │
│  all values)                                                         │
└────────────────────────────────────────────────────────────────────┘
                                  │
                                  ▼
                         ┌──────────────────┐
              ┌─────────▶│  Read an element │
              │          │      from        │
              │          │   Context-data   │
              │          └──────────────────┘
              │                   │
              │                   ▼
              │          ╱───────────────────╲
              │    N    ╱     Element has:     ╲
              │◀───────╱      Activity = "play" ╲
              │        ╲     Mediagenre = music ╱
              │         ╲───────────────────────╱
              │                   │ Y
              │                   ▼
              │        ┌────────────────────────────────┐
              │        │  Read Actual-point, Read        │
              │        │  metadata of this element from  │
              │        │  Context-data,                  │
              │        │  calculate the weighted-        │
              │        │  "dist to actual-point"         │
              │        └────────────────────────────────┘
              │                   │                               ┌──────────────────┐
              │                   ▼                               │ add the calculated│
              │          ╱──────────────────╲                     │ "dist to actual-  │
              │         ╱  The value          ╲                   │ point"            │
              │        ╱  of "dist to actual   ╲       N          │ to the Content-   │
              │        ╲  point" for the row   ╱────────────────▶ │ data              │
              │        ╲  belonging to this    ╱                  │ (in the "dist to  │
              │         ╲ element is still eq. ╱                  │ actual point"-    │
              │          ╲to the default value,╱                  │ column            │
              │           ╲it has not yet been ╱                  │ and the row       │
              │            ╲  changed.        ╱                   │ belonging to      │
              │             ╲────────────────╱                    │ the content genre │
              │                   │ Y                             │ of this element)  │
              │                   ▼                               └──────────────────┘
              │        ┌────────────────────────────────┐                 │
              │        │  Write the calculated "dist to  │                 │
              │        │  actual-point"                  │                 │
              │        │  to the Content-data            │                 │
              │        │  (in the "dist to actual point"-│                 │
              │        │  column                         │                 │
              │        │  and the row belonging to       │                 │
              │        │  the content genre of this      │                 │
              │        │  element)                       │                 │
              │        │  by overwriting the default     │                 │
              │        │  value.                         │                 │
              │        └────────────────────────────────┘                 │
              │                   │                                        │
              │                   ▼                                        │
              │   Y     ╱──────────────────╲                               │
              └────────╱   There are         ╲◀────────────────────────────┘
                       ╲  more elements       ╱
                       ╲  in Context data    ╱
                        ╲──────────────────╱
                                  │ N
                                  ▼
┌────────────────────────────────────────────────────────────────────┐
│  Sort the Content-data table by the "dist to actual point" –column   │
│  (The smallest values on the top)                                    │
│  And write the elements into the User behaviour based suggestion list│
└────────────────────────────────────────────────────────────────────┘
                                  │
                                  ▼
                              ( End )
```

EP 1 826 688 A2

Fig. 14

Flowchart:

**Start**

Read all the existing different albums from the Content database into a new table:
"album based Contentdata" using the album as entry point in the new table
and make a new column."dist to actual point" in this table.
Initialize this new column to a very big real value (bigger than all values)

Read an element
from
Context-data

Element has:
Activity ="play"
Mediagenre= photo  — N / Y

Read Actual-point, Read metadata of this
element from Contextdata,
calculate the weighted "dist to actualpoint"

The value
of "dist to actual point
for the row belonging to this element
is still equal to the default value,
it has not yet been
changed.  — N / Y

add the calculated
"dist to actualpoint"
to the Contentdata
(in the "dist to actual
point"-column
and the row
belonging to
the content album
of this element)

Write the calculated"dist to actualpoint"
to the Contentdata
(in the "dist to actual point-column
and the row belonging to
the content album of this element)
by overwriting the default value.

There are
more elements
in Context data  — Y / N

Sort the Contentdata table by the"dist to actual point –column
(The smallest values on the top)
And write the elements into the User behaviour based suggestlist

**End**

Fig. 15

```
                         ( Start )
                             │
                             ▼
┌─────────────────────────────────────────────────────────────┐
│ Read all the existing different artists from the Content     │
│ database into a new table:                                   │
│ "artist based Contentdata" using the artist as entry point   │
│ in the new table                                             │
│ and make a new column "dist to actual point" in this table.  │
│ Initialize this new column to a very big value (bigger than  │
│ all values)                                                  │
└─────────────────────────────────────────────────────────────┘
                             │
                             ▼
                  ┌──────────────────┐
          ┌──────▶│ Read an element  │
          │       │ from             │
          │       │ Context-data     │
          │       └──────────────────┘
          │                │
          │                ▼
          │         Element has:         N
          │         Activity ="play" ──────┐
          │         Mediagenre= music      │
          │                │ Y             │
          │                ▼               │
          │  ┌──────────────────────────┐  │
          │  │ Read Actualpoint, Read   │  │
          │  │ metadata of this element │  │
          │  │ from Contextdata,        │  │
          │  │ calculate the weighted   │  │
          │  │ "dist to actualpoint"    │  │
          │  └──────────────────────────┘  │
          │                │               │
          │                ▼               │      ┌──────────────────┐
          │       The value                │      │ add the calculated│
          │       of "dist to actual point │  N   │ "dist to actualpoint"│
          │       for the row belonging    │─────▶│ to the Contentdata │
          │       to this element          │      │ (in the "dist to  │
          │       is still equal to the    │      │ actual point"-column│
          │       default value,           │      │ and the row       │
          │       it has not yet been      │      │ belonging to      │
          │       changed.                 │      │ the content artist│
          │                │ Y             │      │ of this element)  │
          │                ▼               │      └──────────────────┘
          │  ┌──────────────────────────┐  │               │
          │  │ Write the calculated     │  │               │
          │  │ "dist to actualpoint"    │  │               │
          │  │ to the Contentdata       │  │               │
          │  │ (in the "dist to actual  │  │               │
          │  │ point"-column            │  │               │
          │  │ and the row belonging to │  │               │
          │  │ the content artist of    │  │               │
          │  │ this element)            │  │               │
          │  │ by overwriting the       │  │               │
          │  │ default value.           │  │               │
          │  └──────────────────────────┘  │               │
          │                │               │               │
          │   Y            ▼               │               │
          └──────── There are ◀────────────┴───────────────┘
                    more elements
                    in Context data
                         │ N
                         ▼
┌─────────────────────────────────────────────────────────────┐
│ Sort the Contentdata table by the "dist to actual point"-    │
│ column                                                       │
│ (The smallest values on the top)                             │
│ And write the elements into the User behaviour based         │
│ suggestion                                                   │
└─────────────────────────────────────────────────────────────┘
                         │
                         ▼
                     ( End )
```

EP 1 826 688 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050278742 A
- EP 1211893 A
- WO 03056821 A
- WO 0154403 A
- WO 02052856 A
- JP 2003219298 A
- JP 10049540 A
- JP 2000132557 A
- US 5223924 A
- WO 0067091 A
- XP 002366656